# EUROPEAN PATENT APPLICATION

(11) **EP 4 822 801 A1**
(43) Date of publication of application: **14.10.2026**
(21) Application number: 24900290.8
(22) Date of filing: 10.10.2024
(51) Int. Cl.: H01M 10/0567, H01M 10/052, H01M 10/054

(54) **SECONDARY BATTERY NON-AQUEOUS ELECTROLYTE AND SECONDARY BATTERY PROVIDED WITH SAME**

(30) Priority: 07.12.2023 JP 2023207295
(71) Applicant: Stella Chemifa Corporation, Osaka-shi, Osaka 541-0044 (JP)
(72) Inventor: KATSURA, Yoshifumi, Sakai-shi, Osaka 590-0982 (JP); EDA, Shohei, Sakai-shi, Osaka 590-0982 (JP); SAKAGUCHI, Toshitaka, Sakai-shi, Osaka 590-0982 (JP); KOJIMA, Yutaka, Sakai-shi, Osaka 590-0982 (JP); MINE, Natsuki, Sakai-shi, Osaka 590-0982 (JP); KON, Sojiro, Sakai-shi, Osaka 590-0982 (JP); TOMISAKI, Megumi, Sakai-shi, Osaka 590-0982 (JP); HASEBE, Rui, Sakai-shi, Osaka 590-0982 (JP); NISHIDA, Tetsuo, Sakai-shi, Osaka 590-0982 (JP)
(74) Representative: Vossius & Partner Patentanwälte Rechtsanwälte mbB
(86) International application number: PCT/JP2024/036300
(87) International publication number: WO 2025/120994

(57) **Abstract**

A secondary battery non-aqueous electrolyte solution for use in a secondary battery characterized by containing as an additive at least one of the following component (A) and at least one of the following component (B): component (A): a compound represented by the following chemical formula (1); component (B): at least one compound selected from the group consisting of a boron complex salt represented by the following chemical formula (2), a borate, an acid anhydride, a cyclic carbonate having an unsaturated bond, a cyclic carbonate having a halogen atom, a cyclic sulfonate, a cyclic sulfate, a cyclic sulfite, amines having acetoacetyl group represented by the following chemical formula (3), a phosphorous compound represented by any of the following chemical formulae (4) to (6), sulfonylimide salts, sulfonates, and dinitriles; wherein the non-aqueous electrolyte solution of the present embodiment can be suitably used in, for example, a lithium ion secondary battery.

## Description

### TECHNICAL FIELD

The present invention relates to, for example, a secondary battery non-aqueous electrolyte solution and a secondary battery provided with same having excellent maintenance property of electric capacity and suppression of increase of internal resistance when stored under a high temperature environment, and excellent maintenance property of electric capacity when repeating charging and discharging, relative to a secondary battery used under high voltage.

### BACKGROUND ART

A lithium secondary battery which is a small electricity storage device having high capacity has become widespread as a power supply for a portable information device such as a laptop computer, a digital camera, a mobile phone, a smart phone, and a tablet. Recently, the application of the lithium secondary battery has become widespread as a stationary rechargeable battery for a mount on an electric vehicle (xEV), a power storage system such as a household power generator and mega solar power plant as a key device for intending to realize carbon neutrality. Consequently, a lithium secondary battery having higher energy density has been developed.

A material which can reversibly insert Li ion to a positive electrode active material and a negative electrode active material has been used in a conventionally general lithium secondary battery. For example, a compound such as LiNiO₂, LiCoO₂, LiMn₂O₄ or LiFePO₄ has been used for the positive electrode active material. In addition, lithium metal, other alloys, carbon material, graphite material or the like has been used for the negative electrode active material. Further, an electrolyte solution in which an electrolyte such as LiPF₆ or LiBF₄ is dissolved in a mixed solvent such as ethylene carbonate, diethyl carbonate or propylene carbonate has been used for an electrolyte solution used in the lithium secondary battery.

It is generally interpreted that a stable membrane (SEI: Solid Electrolyte Interfase) with lithium ion conductivity but without electron conductivity has been formed at an interface between an electrode active material and an electrolyte solution. Although a process for insertion and detachment of lithium ion into an electrode active material has excellent reversibility, when a charging and discharging process is repeated under a high temperature environment, a crack, dissolution or degradation causes at the stable interface, and a tendency such as a decrease of charging and discharging property and an increase of impedance is found.

Patent Publication I discloses that good results are obtained particularly in cyclic property by adding lithium compound such as lithium phenoxide to a lithium secondary battery non-aqueous electrolyte solution.

Patent Publication 2 discloses that hydrogen gas generated upon overcharging of a lithium secondary battery is trapped by using a non-aqueous electrolyte solution containing a lithium phenoxide which is a mildly acidic organic lithium salt, to provide a lithium secondary battery having excellent safety.

### PRIOR ART REFERENCES

### PATENT PUBLICATIONS

Patent Publication 1: Japanese Patent Laid-Open No. 1998-270077 Patent Publication 2: Japanese Patent Laid-Open No. 2003-187863

### SUMMARY OF THE INVENTION

### PROBLEMS TO BE SOLVED BY THE INVENTION

However, it was found that there was a space for improving properties under a high temperature environment in Patent Publications 1 and 2.

The present invention was made by taking the above problems into account, and the object thereof is to provide a secondary battery non-aqueous electrolyte solution and a secondary battery provided with the same exhibiting excellent storage property even under a high temperature environment, reducing internal resistance and exhibiting excellent cyclic property even under high charging voltage.

### MEANS TO SOLVE THE PROBLEMS

In order to solve the above problems, the secondary battery non-aqueous electrolyte of the present invention is a secondary battery non-aqueous electrolyte solution for use in a secondary battery, characterized by containing as an add tive at least one of the following component (A) and at least one of the following component (B):
component (A): a compound represented by the following chemical formula (1): 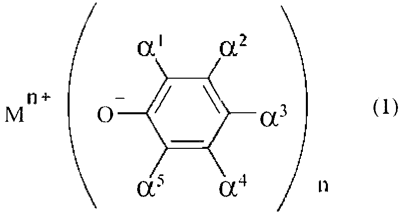 wherein the Mⁿ⁻ represents any one selected from the group consisting of an alkali metal ion, an alkaline-earth metal ion, an aluminum ion, a transition metal ion and an onium ion, the α¹ to α⁵ each, independently, represents a hydrogen atom, a halogen atom, a hydroxy group, a mercapto group, a nitro group, a formyl group, a sulfo group, a carboxy group, an acetyl group, a sulfonamide group, a cyano group, an amino group, a thio group containing a hydrocarbon group having the number of carbon atoms of from 1 to 20, an amino group containing a hydrocarbon group having the number of carbon atoms of from 1 to 20, a sulfonyl group containing a hydrocarbon group having the number of carbon atoms of from 1 to 20, a hydrocarbon group or an alkoxy group having the number of carbon atoms of from 1 to 20, or a hydrocarbon group or an alkoxy group of which the number of carbon atoms ranges from 1 to 20 having at least any one of a halogen atom, a heteroatom or an unsaturated bond, alternatively, in the α¹ to α⁵, any of a hydrocarbon group or an alkoxy group having the number of carbon atoms of from 1 to 20, or a hydrocarbon group or an alkoxy group of which the number of carbon atoms ranges from 1 to 20 having at least any one of a halogen atom, a heteroatom or an unsaturated bond are bonded to each other, to form a cyclic structure, and the n represents a valency;
component (B): at least one compound selected from the group consisting of a boron complex salt represented by the following chemical formula (2), a borate or an acid anhydride, or a cyclic carbonate having an unsaturated bond, a cyclic carbonate having a halogen atom, a cyclic sulfonate, a cyclic sulfate, a cyclic sulfite, amines having an acetoacetyl group represented by the following chemical formula (3), a phosphorous compound represented by any of the following chemical formulae (4) to (6), sulfonylimide salts, sulfonates and dinitriles: 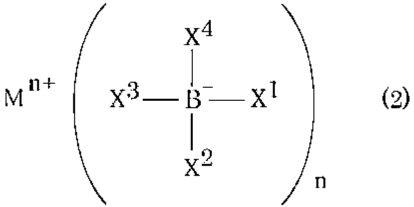 wherein the Mⁿ⁺ represents a hydrogen ion, an alkali metal ion, an alkaline-earth metal ion, an aluminum ion, a transition metal ion or an onium ion, each of the X¹ to X⁴ is independent, and a combination of optionally selected one or two thereof forms a cyclic structure such as - OOC-COO-, -OOCO-, -OOC-Y-COO-, -O-Y-O- or -OOC-Y-O-, wherein the Y each, independently, represents a hydrocarbon group having the number of carbon atoms of from 1 to 20, or a hydrocarbon group of which the number of carbon atoms ranges from 1 to 20 having a heteroatom, an unsaturated bond or a cyclic structure, or the X¹ to X⁴ each, independently, represents a halogen atom, an alkyl group having the number of carbon atoms of from 1 to 20, an alkoxy group having the number of carbon atoms of from 1 to 20, alkyl group of which the number of carbon atoms ranges from 1 to 20 having at least any one of a halogen atom, a heteroatom or an unsaturated bond, or an alkoxy group of which the number of carbon atoms ranges from 1 to 20 having at least any one of a halogen atom, a heteroatom or an unsaturated bond, and the n represents a valency; 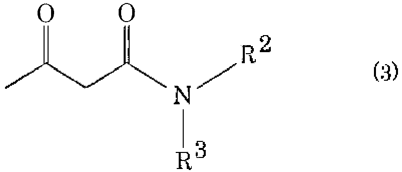 wherein the R² and R³ each, independently, represents a hydrocarbon group having the number of carbon atoms of from 1 to 20, or a hydrocarbon group of which the number of carbon atoms ranges from 1 to 20 having a halogen atom, a heteroatom or an unsaturated bond; 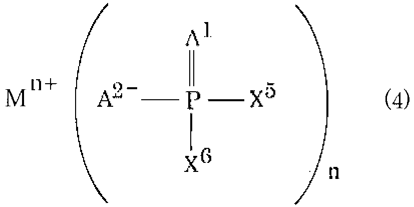
wherein the Mⁿ⁺ represents a hydrogen ion, an alkali metal ion, an alkaline-earth metal ion, an aluminum ion, a transition metal ion or an onium ion, the A¹ and A² each, independently, represents an oxygen atom, a sulfur atom or a selenium atom, the X⁵ and X⁶ each, independently, represents a halogen atom, an alkyl group having the number of carbon atoms of from 1 to 20, or an alkyl group of which the number of carbon atoms ranges from 1 to 20 having at least any one of a halogen atom, a heteroatom or an unsaturated bond, or the X⁵ and X⁶ are any of the alkyl group having the number of carbon atoms of from 1 to 20, or the alkyl group of which the number of carbon atoms ranges from 1 to 20 having at least any one of a halogen atom, a heteroatom or an unsaturated bond, and are bonded to each other, to form a cyclic structure, and the n represents a valency; 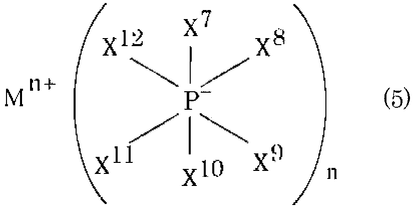
wherein the Mⁿ⁺ represents a hydrogen ion, an alkali metal ion, an alkaline-earth metal ion, an aluminum ion, the component (B) is succinonitrile, a transition metal ion or an onium ion, the X⁷ to X¹² each, independently, represents a halogen atom, an alkyl group having the number of carbon atoms of from 1 to 20, an alkoxy group having the number of carbon atoms of from 1 to 20, an alkylthio group having the number of carbon atoms of from 1 to 20, an alkyl group of which the number of carbon atoms ranges from 1 to 20 having at least any one of a halogen atom, a heteroatom or an unsaturated bond, an alkylthio group having the number of carbon atoms of from 1 to 20, an alkoxy group of which the number of carbon atoms ranges from 1 to 20 having at least any one of a halogen atom, a heteroatom or an unsaturated bond, an alkylthio group having the number of carbon atoms of from 1 to 20, or an alkylthio group of which the number of carbon atoms ranges from 1 to 20 having at least any one of a halogen atom, a heteroatom or an unsaturated bond, or a combination of optionally selected at least one of the X⁷ to X¹² forms a cyclic structure of -OOC-COO-, -OOCO-, -OOC-Z-COO-, -OOC-Z-O- or -O-Z-O-, in that case the Z represents a hydrocarbon group having the number of carbon atoms of from 1 to 20, or a hydrocarbon group of which the number of carbon atoms ranges from 1 to 20 having at least any one of a halogen atom, a heteroatom, an unsaturated bond or a cyclic structure, and the n represents a valency; and 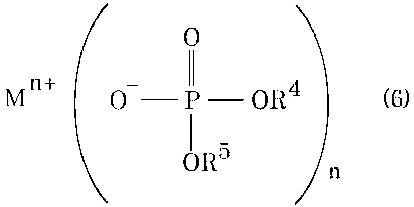
wherein the Mⁿ⁺ represents a hydrogen ion, an alkali metal ion, an alkaline-earth metal ion, an aluminum ion, a transition metal ion or an onium ion, the R⁴ and R⁵ each, independently, represents a hydrocarbon group having the number of carbon atoms of from 1 to 20, or a hydrocarbon group of which the number of carbon atoms ranges from 1 to 20 having at least any one of a halogen atom, a heteroatom or an unsaturated bond, or the R⁴ and R⁵ represent any of the hydrocarbon group having the number of carbon atoms of from 1 to 20, or the hydrocarbon group of which the number of carbon atoms ranges from 1 to 20 having at least any one of a halogen atom, a heteroatom or an unsaturated bond, and ones which are bonded to each other to form a cyclic structure, and the n represents a valency.

In the constitution mentioned above, it is preferred that the content of the component (A) based on the total mass of the secondary battery non-aqueous electrolyte solution is from 0.05 to 5% by mass.

In addition, in the constitution mentioned above, it is preferred that the content of the component (B) based on the total mass of the secondary battery non-aqueous electrolyte solution is from 0.05 to 5% by mass.

In the constitution mentioned above, it is preferred that the component (A) is lithium phenoxide, lithium 4-tert-amylphenoxide or sodium phenoxide.

In the constitution mentioned above, it is preferred that the component (B) is 1,3-propanesultone.

In the constitution mentioned above, it is preferred that the component (B) is vinylene carbonate.

In the constitution mentioned above, it is preferred that the component (B) is fluoroethylene carbonate.

In the constitution mentioned above, it is preferred that the component (B) is lithium difluorophosphate.

In the constitution mentioned above, it is preferred that the component (B) is lithium difluoro(oxalato)borate.

In the constitution mentioned above, it is preferred that the component (B) is lithium difluorobis(oxalato)phosphate.

In the constitution mentioned above, it is preferred that the component (B) is lithium tetrafluoro(oxalato)phosphate.

In the constitution mentioned above, it is preferred that the component (B) is lithium bis(fluorosulfonyl)imide.

In the constitution mentioned above, it is preferred that the component (B) is lithium fluorosulfonate.

In the constitution mentioned above, it is preferred that the component (B) is succinonitrile.

In addition, in order to solve the above problems, the secondary battery of the present invention is characterized by at least containing the secondary battery non-aqueous electrolyte solution, the positive electrode and the negative electrode.

### EFFECTS OF THE INVENTION

According to the present invention, a secondary battery non-aqueous electrolyte solution and a secondary battery provided with the same exhibiting excellent storage property even under a high temperature environment, reducing internal resistance, and exhibiting excellent cyclic property even under high charging voltage can be provided. Although the mechanism is not clear, it is assumed that a membrane is formed on the surface of an electrode active material by containing at least one component (A) and at least one component (B) as an additive, and property of the membrane, i.e. thermal stability or property of a membrane material or the like improves cyclic property under a high temperature environment.

### BRIEF DESCRIPTION OF THE DRAWINGS

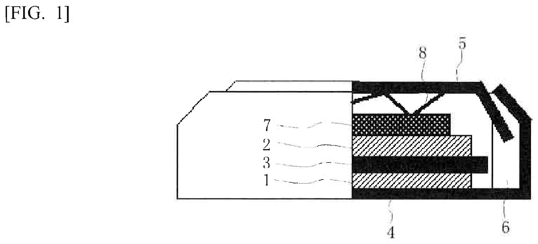

[FIG. 1] FIG. 1 is a cross-sectional, schematic view showing an overview of a lithium ion secondary battery provided with a secondary battery non-aqueous electrolyte solution according to one embodiment of the present invention.

### MODES FOR CARRYING OUT THE INVENTION

### (Secondary Battery Non-Aqueous Electrolyte Solution)

The secondary battery non-aqueous electrolyte solution of the present embodiment (hereinafter, referred to as "non-aqueous electrolyte solution") is an organic solvent (non-aqueous solvent) dissolving an electrolyte which contains at least one component (A) set forth below and at least one component (B) set forth below as an additive.

An irreversible reaction such as degradation of a non-aqueous electrolyte solution occurs at an interface between an electrode and a non-aqueous electrolyte solution upon an initial charging. It is considered that a nature of the formed membrane, for example, thermal stability, ion conductivity, morphology, compactness or the like largely varies depending on the kinds of an electrode active material, a non-aqueous solvent, an electrolyte in a non-aqueous electrolyte solution and additives, and a condition of charging and discharging. In the present embodiment, it is considered that a membrane is formed on a surface of the electrode active material by adding components (A) and (B) together to the non-aqueous electrolyte solution, and cyclic property of a secondary battery under a high temperature environment (for example, 40° to 80°C) is improved by ascribing to a nature of the membrane, i.e. thermal stability or effects of a membrane material or the like.

### < Component (A) >

At least one component (A) is contained in the non-aqueous electrolyte solution, and specifically, the component is a compound represented by the following chemical formula (1).

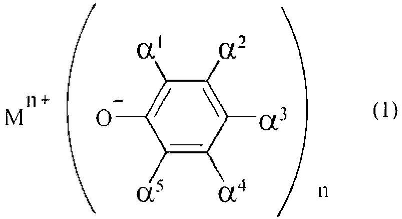

In the chemical formula (1), the Mⁿ⁺ represents any one selected from the group consisting of an alkali metal ion, an alkaline-earth metal ion, an aluminum ion, a transition metal ion and an onium ion.

The alkali metal ion includes, without being particularly limited to, a lithium ion, a sodium ion, a potassium ion, a rubidium ion, a cesium ion and the like. These can be used alone or in combination of two or more kinds.

The alkaline-earth metal ion includes a magnesium ion, a calcium ion, a strontium ion, a barium ion and the like. These can be used alone or in combination of two or more kinds.

The transition metal ion includes, without being particularly limited to, for example, a manganese ion, a cobalt ion, a nickel ion, a chrome ion, a copper ion, a silver ion, a molybdenum ion, a tungsten ion, a vanadium ion, and the like. These can be used alone or in combination of two or more kinds.

The onium ion includes an ammonium ion (NH⁴⁺), a primary ammonium ion, a secondary ammonium ion, a tertiary ammonium ion, a quaternary ammonium ion, a quaternary phosphonium ion, a sulfonium ion and the like.

The primary ammonium ion includes, without being particularly limited to, for example, a methylammonium ion, an ethylammonium ion, a propylammonium ion, an isopropylammonium ion and the like. These can be used alone or in combination of two or more kinds.

The secondary ammonium ion includes, without being particularly limited to, for example, a dimethylammonium ion, a diethylammonium ion, a dipropylammonium ion, a dibutylammonium ion, an ethylmethyl ammonium ion, a methylpropyl ammonium ion, a methylbutyl ammonium ion, a propylbutyl ammonium ion, a diisopropyl ammonium ion and the like. These can be used alone or in combination of two or more kinds.

The tertiary ammonium ion includes, without being particularly limited to, for example, a trimethylammonium ion, a triethylammonium ion, a tripropylammoniumammonium ion, a tributylammonium ion, an ethyldimethyl ammonium ion, a diethylmethyl ammonium ion, a triisopropyl ammonium ion, a dimethylisopropyl ammonium ion, a diethylisopropyl ammonium ion, a dimethylpropyl ammonium ion, a butyldimethyl ammonium ion, a 1-methylpyrrolidinium ion, a 1-ethylpyrrolidinium ion, a 1-propylpyrrolidinium ion, a 1-butylpropylpyrrolidinium ion, a 1-methylimidazolium ion, a 1-ethylimidazolium ion, a 1-propylimidazolium ion, a 1-butylimidazolium ion, a pyrazolium ion, a 1-methylpyrazolium ion, a 1-ethylpyrazolium ion, a 1-propylpyrazolium ion, a 1-butylpyrazolium ion, a pyridinium ion and the like. These can be used alone or in combination of two or more kinds.

The quaternary ammonium constituting the quaternary ammonium ion includes, without being particularly limited to, for example, aliphatic quaternary ammoniums, imidazoliums, pyridiniums, pyrazoliums, pyridaziniums and the like. These can be used alone or in combination of two or more kinds.

Further, the aliphatic quaternary ammoniums include, without being particularly limited to, for example, tetraethyl ammonium, tetrapropyl ammonium, tetraisopropyl ammonium, trimethylethyl ammonium, dimethyldiethyl ammonium, methyltriethyl ammonium, trimethylpropyl ammonium, trimethylisopropyl ammonium, tetrabutyl ammonium, trimethylbutyl ammonium, trimethylpentyl ammonium, trimethylhexyl ammonium, 1-ethyl-1-methyl-pyrrolidinium, 1-butyl-1-methyl pyrrolidinium, 1-ethyl-1-methyl-piperidinium, 1-butyl-1-methylpiperidinium and the like. These can be used alone or in combination of two or more kinds.

The imidazoliums include, without being particularly limited to, for example, 1,3dimethyl-imidazolium, 1-ethyl-3-methylimidazolium, 1-n-propyl-3-methylimidazolium, 1-n-butyl-3-methylimidazolium, 1-n-hexyl-3-methylimidazolium and the like. These can be used alone or in combination of two or more kinds.

The pyridiniums include, without being particularly limited to, for example, 1-methylpyridinium, 1-ethylpyridinium, 1-n-propylpyridinium and the like. These can be used alone or in combination of two or more kinds.

The pyrazoliums include, without being particularly limited to, for example, 1,2-dimethylpyrazolium, 1-methyl-2-ethylpyrazolium, 1-propyl-2-methylpyrazolium, 1-methyl-2-butylpyrazolium, 1-methylpyrazolium, 3-methylpyrazolium, 4-methylpyrazolium, 4-iodopyrazolium, 4-bromopyrazolium, 4-iodo-3-methylpyrazolium, 4-bromo-3-methylpyrazolium, and 3-trifluoromethyl pyrazolium. These can be used alone or in combination of two or more kinds.

The pyridaziniums include, without being particularly limited to, for example, 1-methylpyridazinium, 1-ethylpyridazinium, 1-propylpyridazinium, 1-butylpyridazinium, 3-methylpyridazinium, 4-methylpyridazinium, 3-methoxypyridazinium, 3,6-dichloropyridazinium, 3,6-dichlo-4-methylpyridazinium, 3-chloro-6-methylpyridazinium, and 3-chloro-6-methoxypyridazinium. These can be used alone or in combination of two or more kinds.

The quaternary phosphonium constituting the quaternary phosphonium ion includes, without being particularly limited to, for example, benzyl triphenyl phosphonium, tetraethyl phosphonium, tetraphenylphosphonium and the like. These can be used alone or in combination of two or more kinds.

The sulfonium ion includes, without being particularly limited to, for example, trimethyl sulfonium, triphenyl sulfonium, triethyl sulfonium, and the like. These can be used alone or in combination of two or more kinds.

Among ones listed as an exemplification of the Mⁿ⁺, a lithium ion, a sodium ion, a potassium ion, a magnesium ion, a calcium ion, a tetraalkyl ammonium ion, an alkyl imidazolium ion, an alkyl pyrrolidinium ion, and an alkyl pyridinium ion are preferred from the viewpoint of availability.

In the chemical formula (1), the α¹ to α⁵ each, independently, represents a hydrogen atom, a halogen atom, a hydroxy group, a mercapto group, a nitro group, a formyl group, a sulfo group, a carboxy group, an acetyl group, a sulfonamide group, a cyano group, an amino group, a thio group containing a hydrocarbon group, an amino group containing a hydrocarbon group, a sulfonyl group containing a hydrocarbon group, a hydrocarbon group, an alkoxy group, or a hydrocarbon group or an alkoxy group having at least any one of a halogen atom, a heteroatom or an unsaturated bond (hereinafter, referred to as "a hydrocarbon group or an alkoxy group having a halogen atom or the like"). The number of carbon atoms of the thio group containing a hydrocarbon group, the amino group containing a hydrocarbon group, the sulfonyl group containing a hydrocarbon group, the hydrocarbon group, the alkoxy group, and the hydrocarbon group or the alkoxy group having a halogen atom or the like ranges from 1 to 20, preferably from 1 to 10, and more preferably from 1 to 4. In addition, the number of the unsaturated bond is preferably within the range of from 1 to 10, more preferably within the range of from 1 to 5, and even more preferably within the range of from 1 to 3.

The halogen atom is any one of iodine, bromine, chlorine or fluorine.

The thio group containing a hydrocarbon group includes, without being particularly limited to, for example, a methylthio group, an ethylthio group, a phenylthio group, a benzylthio group and the like.

The amino group containing a hydrocarbon group includes, without being particularly limited to, for example, a methylamino group, a dimethylamino group, an ethylamino group, a diethyl amino group, a phenylamino group and the like.

The sulfonyl group containing a hydrocarbon group includes, without being particularly limited to, for example, a methane sulfonyl group, an ethane sulfonyl group, a benzenesulfonyl group, p-toluenesulfonyl group and the like.

The hydrocarbon group or a hydrocarbon group having a halogen atom or the like includes, without being particularly limited to, for example, a linear alkyl group such as a methyl group, an ethyl group, a propyl group, a butyl group, an isopropyl group, a pentyl group, a tertamyl group, a hexyl group, a heptyl group, and an octyl group; a cyclic alkyl group such as a cyclopentyl group, and a cyclohexyl group; a linear halogen-containing alkyl group such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a hexafluoro-2-propyl group; a cyclic halogen-containing alkyl group such as a 2-iodocyclohexyl group, a 2-bromocyclohexyl group, a 2-chlorocyclohexyl group, and a 2-fluorocyclohexyl group; a linear alkenyl group such as a 2-propenyl group, an isopropenyl group, a 2-butenyl group, and a 3-butenyl group; a cyclic alkenyl group such as a 2-cyclopentenyl group, a 2-cyclohexenyl group, and a 3-cyclohexenyl group; a linear alkynyl group such as a 2-propinyl group, a 1-butynyl group, a 2-butynyl group, a 3-butynyl group, a 1-pentynyl group, a 2-pentynyl group, a 3-pentynyl group, and a 4-pentynyl group; a phenyl group such as a phenyl group, a 3-methoxyphenyl group, a 4-methoxyphenyl group, a 3,5-dimethoxyphenyl group, and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; a naphthyl group such as 1-naphthyl group, a 2-naphthyl group, and a 3-amino-2-naphthyl group, and the like.

The alkoxy group or an alkoxy group having a halogen atom or the like includes, without being particularly limited to, for example, a linear alkoxy group such as a methoxy group, an ethoxy group, a propoxy group, a butoxy group, a pentoxy group, and a hexoxy group; a cyclic alkoxy group such as a cyclopentoxy group, and a cyclohexoxy group; a linear halogen-containing alkoxy group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichlorothoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group, and a 1,1,1,3,3,3-hexafluoro-2-propoxy group; a cyclic halogen-containing alkoxy group such as a 2-iodocyclohexoxy group, a 2-bromocyclohexoxy group, a 2-chlorocyclohexoxy group, and a 2-fluorocyclohexoxy group; a linear alkenylalkoxy group such as a 2-propenoxy group, an isopropenoxy group, a 2-butenoxy group, and a 3-butenoxy group; a cyclic alkenylalkoxy group such as a 2-cyclopentenoxy group, a 2-cyclohexenoxy group, and a 3-cyclohexenoxy group; a linear alkynylalkoxy group such as a 2-propynoxy group, a 1-butynoxy group, a 2-butynoxy group, a 3-butynoxy group, a 1-pentynoxy group, a 2-pentynoxy group, a 3-pentynoxy group, and a 4-pentynoxy group; a phenoxy group such as a phenoxy group, a 3-methylphenoxy group, a 4-methylphenoxy group, and a 3,5-dimethylphenoxy group; a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3,5-diiodophenoxy group, a 3,5-dibrophenoxy group, a 3,5-dichlorophenoxy group, and a 3,5-difluorophenoxy group, and the like.

In addition, as to the α¹ to α⁵, any one of the hydrocarbon group or the alkoxy group, or the hydrocarbon group or the alkoxy group having at least any one of a halogen atom, a heteroatom or an unsaturated bond may be bound to each other to form a cyclic structure. In this case, the hydrocarbon group or a hydrocarbon group having a halogen atom or the like in the α¹ to α⁵ includes, for example, a linear alkylene group such as a methylene group, an ethylene group, a propylene group, a butylene group, a pentylene group, a hexylene group, a heptylene group, an octylene group, and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group, and a tetrafluoroethylene group; and a cyclic hydrocarbon group such as a cyclohexylene group, a phenylene group, a benzylene group, a naphthylene group, an anthracylene group, a naphthacylene group, and a pentasylene group. In addition, an alkoxy group or an alkoxy group having a halogen atom or the like in the α¹ to α⁵ includes, for example, a linear alkylenedioxy group such as a methylenedioxy group, an ethylenedioxy group, a propylenedioxy group, a butylenedioxy group, a pentylenedioxy group, a hexylenedioxy group, a heptylenedioxy group, an octylenedioxy group, a nonylenedioxy group; a cyclic alkylenedioxy group such as a cyclohexylenedioxy group; a halogen-containing linear alkylenedioxy group such as an iodomethylenedioxy group, a diiodomethylenedioxy group, a bromomethylenedioxy group, a dibromomethylenedioxy group, a fluoromethylenedioxy group, a difluoromethylenedioxy group, an iodoethylenedioxy group, a 1,1-diiodoethylenedioxy group, a 1,2-diiodoethylenedioxy group, a triiodoethylenedioxy group, a tetraiodoethylenedioxy group, a chloroethylenedioxy group, a 1,1-dichloroethylenedioxy group, a 1,2-dichloroethylenedioxy group, a trichloroethylenedioxy group, a tetrachloroethylenedioxy group, a fluoroethylenedioxy group, a 1,1-difluoroethylenedioxy group, a 1,2-difluoroethylenedioxy group, a trifluoroethylenedioxy group, and a tetrafluoroethylenedioxy group; and an arylenedioxy group such as a phenylenedioxy group, a benzylenedioxy group, a naphtylenedioxy group, an anthracylenedioxy group, a naphthasilenedioxy group, and a pentasylenedioxy group, and an alkoxy group of which a part or a whole is replaced with a halogen atom or the like.

The α¹ to α⁵ may be same kind or different from each other. In addition, the functional groups mentioned above as the α¹ to α⁵ are only an exemplification, and the present embodiment is not limited thereto.

Here, the halogen atom means an atom of fluorine, chlorine, bromine or iodine. The hydrocarbon group having a halogen atom means that a part or a whole of hydrogen in the hydrocarbon group may be substituted with any of these halogen atoms. In addition, the heteroatom means an atom of oxygen, nitrogen, sulfur or the like. The hydrocarbon group having a heteroatom means that a part or a whole of hydrogen and carbon in the hydrocarbon group may be substituted with any of these heteroatoms. The unsaturated bond means, for example, a double bond between carbon-carbon, carbon-oxygen, sulfur-oxygen or the like, or a triple bond between carbon-carbon, carbon-nitrogen or the like. The hydrocarbon group having an unsaturated bond means that a part or a whole of bonds between carbon-hydrogen and carbon-carbon in the hydrocarbon group may be substituted with any of these unsaturated bonds.

In the chemical formula (1), the n represents a valency, for example, n = 1 in the case where the M is a monovalent cation, n = 2 in the case of a divalent cation, and n = 3 in the case of a trivalent cation.

The specific example of the phenoxide salt represented by the chemical formula (1) includes, for example, lithium phenoxide, sodium phenoxide, potassium phenoxide, cesium phenoxide, triethylmethylammonium phenoxide, lithium 2-methylphenoxide, lithium 3-methylphenoxide, lithium 4-methylphenoxide, lithium 2-aminophenoxide, lithium 3-aminophenoxide, lithium 4-aminophenoxide, lithium 2-fluorophenoxide, lithium 3-fluorophenoxide, lithium 4-fluorophenoxide, lithium 2-cyanophenoxide, lithium 3-cyanophenoxide, lithium 4-cyanophenoxide, lithium 2-ethylphenoxide, lithium 3-ethylphenoxide, lithium 4-ethylphenoxide, lithium 2,3-dimethylphenoxide, lithium 2,4-dimethylphenoxide, lithium 2,5-dimethylphenoxide, lithium 2,6-dimethylphenoxide, lithium 3,4-dimethylphenoxide, lithium 5-amino-2-methylphenoxide, lithium 2-amino-3-methylphenoxide, lithium 6-amino-3-methylphenoxide, lithium 4-amino-2-methylphenoxide, lithium 2-amino-4-methylphenoxide, lithium 4-amino-3-methylphenoxide, lithium 3-amino-4-methylphenoxide, lithium 3-methoxyphenoxide, lithium 2-methoxyphenoxide, lithium 4-methoxyphenoxide, lithium 4-fluoro-3-methylphenoxide, lithium 4-fluoro-2-methylphenoxide, lithium 3-fluoro-4-methylphenoxide, lithium 5-fluoro-2-methylphenoxide, lithium 2-mercaptophenoxide, lithium 4-chlorophenoxide, lithium 2-chlorophenoxide, lithium 3-chlorophenoxide, lithium 2,6-difluorophenoxide, lithium 3,5-difluorophenoxide, lithium 3,4-difluorophenoxide, lithium 2,4-difluorophenoxide, lithium 2,3-difluorophenoxide, lithium 2,5-difluorophenoxide, lithium 2,3,4-trifluorophenoxide, lithium 2,3,6-trifluorophenoxide, lithium 3,4,5-trifluorophenoxide, lithium 2,3,5,6-tetrafluorophenoxide, lithium pentafluorophenoxide, lithium 2-allylphenoxide, lithium 4-allylphenoxide, lithium 2-acetylphenoxide, lithium 3-acetylphenoxide, lithium 4-acetylphenoxide, lithium 2,4,6-trimethylphenoxide, lithium 2-methylthiophenoxide, lithium 4-methylthiophenoxide, lithium 2-naphthoxide, lithium1-naphthoxide, lithium 5,6,7,8-tetrahydro-2-naphthoxide, lithium 5,6,7,8-tetrahydro-1-naphthoxide, lithium 3-tert-butylphenoxide, lithium 2-tert-butylphenoxide, lithium 4-tert-butylphenoxide, lithium 2-tert-amylphenoxide, lithium 4-tert-amylphenoxide, lithium 2-trifluoromethylphenoxide, lithium 4-trifluoromethylphenoxide, lithium 3-trifluoromethylphenoxide, lithium 3,5-dichlorophenoxide, lithium 3,4-dichlorophenoxide, lithium 2,4-dichlorophenoxide, lithium 2,5-dichlorophenoxide, lithium 2,6-dichlorophenoxide, lithium 3-phenylphenoxide, lithium 4-phenylphenoxide, lithium 2-phenylphenoxide, lithium 4-bromophenoxide, lithium 3-bromophenoxide, lithium 2-bromophenoxide, lithium 4-cyclohexylphenoxide, lithium 2-cyclohexylphenoxide, lithium 2-benzylphenoxide, lithium 4-benzylphenoxide, lithium 4-phenoxyphenoxide, lithium 3,4,5-trichlorophenoxide, lithium 2,4,6-trichlorophenoxide, lithium 3-iodophenoxide, lithium 2-iodophenoxide, lithium 4-iodophenoxide, lithium 4-(1-adamantyl)phenoxide, lithium 3,5-dibromophenoxide, lithium 2,6-dibromophenoxide, lithium 2,4-dibromophenoxide, lithium 2,4,6-tribromophenoxide, lithium 2,4,6-triiodophenoxide, lithium 4-triphenylmethylphenoxide, and the like. However, the phenoxide salt is not limited to the group of these compounds. Although the action mechanism of the phenoxide salt in the electrolyte solution is not elucidated, an assumption is made as follows, based on the general fact. A base such as alkoxides can be used to control acidity in the electrolyte solution. However, when a strong base such as alkoxides is used, a side reaction of the base with an organic solvent which is used in the electrolyte solution is concerned. On the other hand, s˙nce phenoxides take a resonant structure in a molecular scaffold, basicity of phenoxides is lower than that of alkoxides, so that the side reaction with an organic solvent is inhibited, and the degradation of the electrolyte solution can be prevented. In addition, since the benzene scaffold which is a component of phenoxides takes a resonant structure, it is considered that the benzene scaffold is thermodynamically stable and has high stability even in an electrochemical reaction. Therefore, it is assumed that the phenoxide anion stably interacts with a transition metal in the positive electrode active material, and dissolution of the transition metal into the electrolyte solution is suppressed, thereby preventing the deterioration of capacity.

Here, among the phenoxide salt exemplified above, a lithium phenoxide and a sodium phenoxide are particularly preferred, since the presence of heterogenous metal ion is likely to adversely influence a metal ion secondary battery.

The content of the component (A) based on the total mass of non-aqueous electrolyte solution is preferably within the range of from 0.05 to 5% by mass, more preferably within the range of from 0.07 to 3% by mass, and even more preferably within the range of from 0.10 to 2% by mass. Cyclic property of the secondary battery under a high temperature environment can be further improved by adjusting the added amount to 0.05% by mass or more and containing at least one component (B) mentioned below as a further additive. On the other hand, the decrease of solubility to the non-aqueous electrolyte solution solvent of the electrolyte in the non-aqueous electrolyte solution can be suppressed by adjusting the added amount to 5% by mass or less.

In addition, in the present embodiment, at least one component (A) may be contained in the non-aqueous electrolyte solution, and the number of kinds of component (A) to be contained is preferably from 1 to 5, more preferably from 1 to 3, and particularly preferably from 1 to 2. Complexity of steps in the production of the non-aqueous electrolyte solution can be suppressed by reducing the kinds of component (A).

### < Component (B) >

In the non-aqueous electrolyte solution of the present embodiment, it is required to contain at least one component (B) mentioned below as a further additive, in addition to the above component (A). This can improve cyclic property under a high temperature environment.

The component (B) is at least one compound selected from the group consisting of a boron complex salt represented by the following chemical formula (2), or a borate, an acid anhydride, a cyclic carbonate having an unsaturated bond, a cyclic carbonate having a halogen atom, a cyclic sulfonate, a cyclic sulfate and a cyclic sulfite, amines having an acetoacetyl group represented by the following chemical formula (3), a phosphorous compound represented by any of the following chemical formulae (4) to (6), sulfonylimide salts, sulfonates and dinitriles.

### [Boron Complex Salt]

The boron complex salt is specifically represented by the following chemical formula (2).

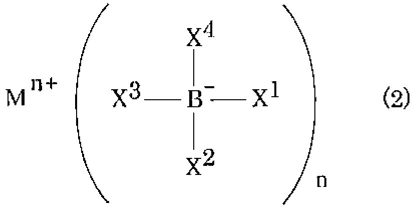

In the chemical formula (2), Mⁿ⁺ is as previously described, and represents any one selected from the group consisting of a hydrogen ion, an alkali metal ion, an alkaline-earth metal ion, an aluminum ion, a transition metal ion and an onium ion. Accordingly, the detailed description thereof is omitted.

In the chemical formula (2), the X¹ to X⁴ each, independently, represents a combination of the optionally selected one or two forming a cyclic structure of -OOC-COO-, -OOCO-, -OOC-Y-COO-, -O-Y-O- or - OOC-Y-O-. In that case, the Y represents a hydrocarbon group having the number of carbon atoms preferably from 1 to 20, preferably from 1 to 10, and more preferably from 1 to 10, or a hydrocarbon group of which the number of carbon atoms ranges from 1 to 20, preferably from 1 to 10, and more preferably from 1 to 5 having a heteroatom, an unsaturated bond or a cyclic structure. When the X¹ to X⁴ have two of any one of the cyclic structure of -OOC-Y-COO-, -O-Y-O- or -OOC-Y-O-, each Y may be different. Here, the heteroatom means an oxygen atom, a nitrogen atom or a sulfur atom.

The Y includes, without being particularly limited to, for example, a linear alkylene group such as a methylene group, an ethylene group, a propylene group, a butylene group, a pentylene group, a hexylene group, a heptylene group, an octylene group, and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group, and a tetrafluoroethylene group; a cyclic hydrocarbon group such as a cyclohexylene group, a phenylene group, a benzylene group, a naphthylene group, an anthracylene group, a naphthacylene group, and a pentasylene group; a compound of which a part or a whole is replaced with a halogen, and the like.

In addition, when the Y is 1,2-phenylene group, -O-Y-O- represents a benzenediolate group, and -O-Y-COO- represents a salicylate group.

In addition, the X¹ to X⁴ each, independently, may be a halogen atom, an alkyl group having the number of carbon atoms of from 1 to 20, preferably from 1 to 10 and more preferably from 1 to 5, an alkoxy group having the number of carbon atoms of from 1 to 20, preferably from 1 to 10 and more preferably from 1 to 5, an alkyl group of which the number of carbon atoms is within the range of from 1 to 20, preferably from 1 to 10 and more preferably from 1 to 5 having at least any one of a halogen atom, a heteroatom, an unsaturated bond or a cyclic structure, or an alkoxy group of which the number of carbon atoms is within the range of from 1 to 20, preferably from 1 to 10 and more preferably from 1 to 5 having at least any one of a halogen atom, a heteroatom, an unsaturated bond or a cyclic structure. Here, the halogen atom means a fluorine atom, a chlorine atom, a bromine atom or an iodine atom. In addition, the heteroatom means an oxygen atom, a nitrogen atom or a sulfur atom.

The X¹ to X⁴ specifically includes, for example, a linear alkyl group such as a methyl group, an ethyl group, a propyl group, a butyl group, an isopropyl group, a pentyl group, a hexyl group, a heptyl group, and an octyl group; a cyclic alkyl group such as cyclopentyl group, and cyclohexyl group; a linear halogen-containing alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a 1,1,1,3,3,3-hexafluoro-2-propyl group; a cyclic halogen-containing alkyl group such as a 2-iodocyclohexyl group, a 2-bromocyclohexyl group, a 2-chlorocyclohexyl group, and a 2-fluorocyclohexyl group; a linear alkenyl group such as a 2-propenyl group, an isopropenyl group, a 2-butenyl group, and a 3-butenyl group; a cyclic alkenyl group such as a 2-cyclopentenyl group, a 2-cyclohexenyl group, and a 3-cyclohexenyl group; a linear alkynyl group such as a 2-propinyl group, a 1-butynyl group, a 2-butynyl group, a 3-butynyl group, a 1-pentynyl group, a 2-pentynyl group, a 3-pentynyl group, and a 4-pentynyl group; a phenyl group such as a phenyl group, a 3-methoxyphenyl group, a 4-methoxyphenyl group, a 3,5-dimethoxyphenyl group, and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; a linear alkoxy group such as a methoxy group, an ethoxy group, a propoxy group, a butoxy group, a pentoxy group, and a hexoxy group; a cyclic alkoxy group such as a cyclopentoxy group, a cyclohexoxy group; a linear halogen-containing alkyl group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichlorothoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group, and a 1,1,1,3,3,3-hexafluoro-2-propoxy group; a cyclic halogen-containing alkyl group such as a 2-iodocyclohexoxy group, a 2-bromocyclohexoxy group, a 2-chlorocyclohexoxy group, and a 2-fluorocyclohexoxy group; a linear alkenylalkoxy group such as a 2-propenoxy group, isopropenoxy group, a 2-butenoxy group, and a 3-butenoxy group; a cyclic alkenylalkoxy group such as a 2-cyclopentenoxy group, a 2-cyclohexenoxy group, and a 3-cyclohexenoxy group; a linear alkynylalkoxy group such as a 2-propynoxy group, a 1-butynoxy group, a 2-butynoxy group, a 3-butynoxy group, a 1-pentynoxy group, a 2-pentynoxy group, a 3-pentynoxy group, and a 4-pentynoxy group; a phenoxy group such as a phenoxy group, a 3-methylphenoxy group, a 4-methylphenoxy group, and a 3,5-dimethylphenoxy group; a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3,5-diiodophenoxy group, a 3,5-dibrophenoxy group, a 3,5-dichlorophenoxy group, and a 3,5-difluorophenoxy group, and the like.

The X¹ to X⁴ are independent to each other, and may be same species or different species. In addition, the group of functional groups exemplified above is a mere exemplification, without being limited thereto.

The specific example of the boron complex salt represented by the chemical formula (2) includes, for example, lithium bis(oxalato)borate, lithium bis(malonato)borate, lithium bis(salicylato)borate, lithium bis[1,2'-benzyolato(2)-O,O']borate, lithium(oxalato)malonato borate, lithium(oxalato)salicylato borate, lithium oxalato[1,2'-benzyolato(2)-O,O']borate, lithium diiodo(oxalato)borate, lithium dibromo(oxalato)borate, lithium dichloro(oxalato)borate, lithium difluoro(oxalato)borate, lithium iodochloro(oxalato)borate, lithium iodobromo(oxalato)borate, lithium iodofluoro(oxalato)borate, lithium bromochloro(oxalato)borate, lithium bromofluoro(oxalato)borate, lithium chlorofluoro(oxalato)borate, lithium diiodo(malonato)borate, lithium dibromo(malonato)borate, lithium dichloro(malonato)borate, lithium difluoro(malonato)borate, lithium iodochloro(malonato)borate, lithium iodobromo(malonato)borate, lithium iodofluoro(malonato)borate, lithium bromochloro(malonato)borate, lithium bromofluoro(malonato)borate, lithium chlorofluoro(malonato)borate, lithium diiodo(salicylate)borate, lithium dibromo(salicylato)borate, lithium dichloro(salicylato)borate, lithium difluoro(salicylato)borate, lithium iodochloro(salicylate)borate, lithium iodobromo(salicylato)borate, lithium iodofluoro(salicylato)borate, lithium bromochloro(salicylato)borate, lithium bromofluoro(salicylato)borate, lithium chlorofluoro(salicylato)borate, lithium diiodo[1,2'-benzyolato(2)-O,O']borate, lithium dibromo[1,2'-benzyolato(2)-O,O']borate, lithium dichloro[1,2'-benzyolato(2)-O,O']borate, lithium difluoro[1,2'-benzyolato(2)-O,O']borate, lithium iodochloro[1,2'-benzyolato(2)-O,O']borate, lithium iodobromo[1,2'-benzyolato(2)-O,O']borate, lithium iodofluoro[1,2'-benzyolato(2)-O,O']borate, lithium bromochloro[1,2'-benzyolato(2)-O,O']borate, lithium bromofluoro[1,2'-benzyolato(2)-O,O']borate, lithium chlorofluoro[1,2'-benzyolato(2)-O,O']borate, lithium tetraiodo borate, lithium tetrabromo borate, lithium tetrachloro borate, lithium tetrafluoro borate, lithium iodotribromo borate, lithium iodotrichloro borate, lithium iodotrifluoro borate, lithium diiododibromo borate, lithium diiododichloro borate, lithium diiododifluoro borate, lithium triiodobromo borate, lithium triiodochloro borate, lithium triiodofluoro borate, lithium bromotrichloro borate, lithium bromotrifluoro borate, lithium dibromodichloro borate, lithium dibromodifluoro borate, lithium tribromochloro borate, lithium tribromofluoro borate, lithium chlorotrifluoro borate, lithium dichlorodifluoro borate, lithium chlorotrifluoro borate, lithium iodobromochlorofluoro borate, lithium tetramethyl borate, lithium tetraethyl borate, lithium tetraphenyl borate, lithium tetramethoxy borate, lithium tetraethoxy borate, lithium tetraphenoxy borate, lithium ethyldimethylphenyl borate, lithium butylethylmethyl phenyl borate, lithium ethoxydimethoxy phenoxy borate, lithium dimethyl(oxalato)borate, lithium dimethyl(malonato)borate, lithium dimethyl(salicylato)borate, lithium dimethyl[1,2'-benzyolato(2)-O,O']borate, lithium ethylmethyl(oxalato)borate, lithium phenylmethyl(oxalato)borate, lithium iodomethyl(oxalato)borate, lithium bromomethyl(oxalato)borate, lithium chloromethyl(oxalato)borate, lithium fluoromethyl(oxalato)borate, lithium iodoethyl(oxalato)borate, lithium bromoethyl(oxalato)borate, lithium chloroethyl(oxalato)borate, lithium fluoroethyl(oxalato)borate, lithium ethoxymethoxy(oxalato)borate, lithium iodomethoxy(oxalato)borate, lithium bromomethoxy(oxalato)borate, lithium chloromethoxy(oxalato)borate, lithium fluoromethoxy(oxalato)borate, and the like.

In addition, the specific example of the boron complex salt represented by the chemical formula (2) includes, for example, sodium bis(oxalato)borate, sodium bis(malonato)borate, sodium bis(salicylate)borate, sodium bis[1,2'-benzyolato(2)-O,O']borate, sodium(oxalato)malonato borate, sodium(oxalato)salicylato borate, sodium oxalato[1,2'-benzyolato(2)-O,O']borate, sodium diiodo(oxalato)borate, sodium dibromo(oxalato)borate, sodium dichloro(oxalato)borate, sodium difluoro(oxalato)borate, sodium iodochloro(oxalato)borate, sodium iodobromo(oxalato)borate, sodium iodofluoro(oxalato)borate, sodium bromochloro(oxalato)borate, sodium bromofluoro(oxalato)borate, sodium chlorofluoro(oxalato)borate, sodium diiodo(malonato)borate, sodium dibromo(malonato)borate, sodium dichloro(malonato)borate, sodium difluoro(malonato)borate, sodium iodochloro(malonato)borate, sodium iodobromo(malonato)borate, sodium iodofluoro(malonato)borate, sodium bromochloro(malonato)borate, sodium bromofluoro(malonato)borate, sodium chlorofluoro(malonato)borate, sodium diiodo(salicylato)borate, sodium dibromo(salicylato)borate, sodium dichloro(salicylato)borate, sodium difluoro(salicylato)borate, sodium iodochloro(salicylato)borate, sodium iodobromo(salicylato)borate, sodium iodofluoro(salicylato)borate, sodium bromochloro(salicylato)borate, sodium bromofluoro(salicylato)borate, sodium chlorofluoro(salicylato)borate, sodium diiodo[1,2'-benzyolato(2)-O,O']borate, sodium dibromo[1,2'-benzyolato(2)-O,O']borate, sodium dichloro[1,2'-benzyolato(2)-O,O']borate, sodium difluoro[1,2'-benzyolato(2)-O,O']borate, sodium iodochloro[1,2'-benzyolato(2)-O,O']borate, sodium iodobromo[1,2'-benzyolato(2)-O,O']borate, lithium iodofluoro[1,2'-benzyolato(2)-O,O']borate, sodium bromochloro[1,2'-benzyolato(2)-O,O']borate, sodium bromofluoro[1,2'-benzyolato(2)-O,O']borate, sodium chlorofluoro[1,2'-benzyolato(2)-O,O']borate, sodium tetraiodo borate, sodium tetrabromo borate, sodium tetrachloro borate, sodium tetrafluoro borate, sodium iodo tribromo borate, sodium iodo trichloro borate, sodium iodo trifluoro borate, sodium diiodo dibromo borate, sodium diiodo dichloro borate, sodium diiodo difluoro borate, sodium triiodo bromo borate, sodium triiodo chloro borate, sodium triiodo fluoro borate, sodium bromo trichloro borate, sodium bromo trifluoro borate, sodium dibromo dichloro borate, sodium dibromo difluoro borate, sodium tribromo chloro borate, sodium tribromo fluoro borate, sodium chloro trifluoro borate, sodium dichloro difluoro borate, sodium chloro trifluoro borate, sodium iodo bromo chloro fluoro borate, sodium tetramethyl borate, sodium tetraethyl borate, sodium tetraphenyl borate, sodium tetramethoxy borate, sodium tetraethoxy borate, sodium tetraphenoxy borate, sodium ethyl dimethyl phenyl borate, sodium butyl ethyl methyl phenyl borate, sodium ethoxy dimethoxy phenoxy borate, sodium dimethyl(oxalato)borate, sodium dimethyl(malonato)borate, sodium dimethyl(salicylato)borate, sodium dimethyl[1,2'-benzyolato(2)-O,O']borate, sodium ethylmethyl(oxalato)borate, sodium phenylmethyl(oxalato)borate, sodium iodomethyl(oxalato)borate, sodium bromomethyl(oxalato)borate, sodium chloromethyl(oxalato)borate, sodium fluoromethyl(oxalato)borate, sodium iodoethyl(oxalato)borate, sodium bromoethyl(oxalato)borate, sodium chloroethyl(oxalato)borate, sodium fluoroethyl(oxalato)borate, sodium ethoxymethoxy(oxalato)borate, sodium iodomethoxy(oxalato)borate, sodium bromomethoxy(oxalato)borate, sodium chloromethoxy(oxalato)borate, and sodium fluoromethoxy(oxalato)borate.

Further, the specific example of the boron complex salt represented by the chemical formula (2) includes, for example, triethylmethylammonium bis(oxalato)borate, triethylmethylammonium bis(malonato)borate, triethylmethylammonium bis(salicylate)borate, triethylmethylammonium bis[1,2'-benzyolato(2)-O,O']borate, triethylmethylammonium(oxalato)malonato borate, triethylmethylammonium(oxalato)salicylato borate, triethylmethylammonium oxalato[1,2'-benzyolato(2)-O,O']borate, triethylmethylammonium diiodo(oxalato)borate, triethylmethylammonium dibromo(oxalato)borate, triethylmethylammonium dichloro(oxalato)borate, triethylmethylammonium difluoro(oxalato)borate, triethylmethylammonium iodochloro(oxalato)borate, triethylmethylammonium iodobromo(oxalato)borate, triethylmethylammonium iodofluoro(oxalato)borate, triethylmethylammonium bromochloro(oxalato)borate, triethylmethylammonium bromofluoro(oxalato)borate, triethylmethylammonium chlorofluoro(oxalato)borate, triethylmethylammonium diiodo(malonato)borate, triethylmethylammonium dibromo(malonato)borate, triethylmethylammonium dichloro(malonato)borate, triethylmethylammonium difluoro(malonato)borate, triethylmethylammonium iodochloro(malonato)borate, triethylmethylammonium iodobromo(malonato)borate, triethylmethylammonium iodofluoro(malonato)borate, triethylmethylammonium bromochloro(malonato)borate, triethylmethylammonium bromofluoro(malonato)borate, triethylmethylammonium chlorofluoro(malonato)borate, triethylmethylammonium diiodo(salicylato)borate, triethylmethylammonium dibromo(salicylato)borate, triethylmethylammonium dichloro(salicylato)borate, triethylmethylammonium difluoro(salicylato)borate, triethylmethylammonium iodo chloro(salicylato)borate, triethylmethylammonium iodo bromo(salicylato)borate, triethylmethylammonium iodo fluoro(salicylato)borate, triethylmethylammonium bromo chloro(salicylato)borate, triethylmethylammonium bromo fluoro(salicylato)borate, triethylmethylammonium chloro fluoro(salicylato)borate, triethylmethylammonium diiodo[1,2'-benzyolato(2)-O,O']borate, triethylmethylammonium dibromo[1,2'-benzyolato(2)-O,O']borate, triethylmethylammonium dichloro[1,2'-benzyolato(2)-O,O']borate, triethylmethylammonium difluoro[1,2'-benzyolato(2)-O,O']borate, triethylmethylammonium iodochloro[1,2'-benzyolato(2)-O,O']borate, triethylmethylammonium iodobromo[1,2'-benzyolato(2)-O,O']borate, triethylmethylammonium iodofluoro[1,2'-benzyolato(2)-O,O']borate, triethylmethylammonium bromochloro[1,2'-benzyolato(2)-O,O']borate, triethylmethylammonium bromofluoro[1,2'-benzyolato(2)-O,Oborate, triethylmethylammonium chlorofluoro[1,2'-benzyolato(2)-O,O']borate, triethylmethylammonium tetraiodo borate, triethylmethylammonium tetrabromo borate, triethylmethylammonium tetrachloro borate, triethylmethylammonium tetrafluoro borate, triethylmethylammonium iodotribromo borate, triethylmethylammonium iodotrichloro borate, triethylmethylammonium iodotrifluoro borate, triethylmethylammonium diiododibromo borate, triethylmethylammonium diiododichloro borate, triethylmethylammonium diiododifluoro borate, triethylmethylammonium triiodobromo borate, triethylmethylammonium triiodochloro borate, triethylmethylammonium triiodofluoro borate, triethylmethylammonium bromotrichloro borate, triethylmethylammonium bromotrifluoro borate, triethylmethylammonium dibromodichloro borate, triethylmethylammonium dibromodifluoro borate, triethylmethylammonium tribromochloro borate, triethylmethylammonium tribromofluoro borate, triethylmethylammonium chlorotrifluoro borate, triethylmethylammonium dichlorodifluoro borate, triethylmethylammonium chlorotrifluoro borate, triethylmethylammonium iodobromochlorofluoro borate, triethylmethylammonium tetramethyl borate, triethylmethylammonium tetraethyl borate, triethylmethylammonium tetraphenyl borate, triethylmethylammonium tetramethoxy borate, triethylmethylammonium tetraethoxy borate, triethylmethylammonium tetraphenoxy borate, triethylmethyl ethyl ammonium dimethylphenyl borate, triethylmethylammonium butylethylmethyl phenyl borate, triethylmethylammonium ethoxydimethoxyphenoxy borate, triethylmethylammonium dimethyl(oxalato)borate, triethylmethylammonium dimethyl(malonato)borate, triethylmethylammonium dimethyl(salicylate)borate, triethylmethylammonium dimethyl[1,2'-benzyolato(2)-O,O']borate, triethylmethylammonium ethylmethyl(oxalato)borate, triethylmethylammonium phenylmethyl(oxalato)borate, triethylmethylammonium iodomethyl(oxalato)borate, triethylmethylammonium bromomethyl(oxalato)borate, triethylmethylammonium chloromethyl(oxalato)borate, triethylmethylammonium fluoromethyl(oxalato)borate, triethylmethylammonium iodoethyl(oxalato)borate, triethylmethylammonium bromoethyl(oxalato)borate, triethylmethylammonium chloroethyl(oxalato)borate, triethylmethylammonium fluoroethyl(oxalato)borate, triethylmethylammonium ethoxymethoxy(oxalato)borate, triethylmethylammonium iodomethoxy(oxalato)borate, triethylmethylammonium bromomethoxy(oxalato)borate, triethylmethylammonium chloromethoxy(oxalato)borate, triethylmethylammonium fluoromethoxy(oxalato)borate, and the like.

Here, the specific example of the boron complex salt represented by the chemical formula (2) mentioned above is a mere exemplification, and the present embodiment is not limited thereto.

Here, the boron complex salt is preferably a lithium bis(oxalato)borate, triethylmethylammonium bis(oxalato)borate, lithium bis(salicylato)borate or a lithium bis[1,2'-benzyolato(2)-O,O']borate, or a lithium difluoro(oxalato)borate from the viewpoint of availability.

Here, the n in the chemical formula (2) represents a valency as the case of the chemical formula (1).

### [Borate]

The borate is not particularly limited in the kinds, unless properties of the non-aqueous electrolyte solution and the secondary battery using the same of the present embodiment are impaired, and various borates can be selected. Specifically, the borate includes, for example, a trimethyl borate, triethyl borate, triisopropyl borate, tributyl borate, tripentyl borate, trihexyl borate, triheptyl borate, triphenyl borate, 2- tris(2,2,2-iodoethyl)borate, tris(2,2,2-tribromoethyl)borate, tris(2,2,2-trichloroethyl)borate tris(2,2,2-trifluoroethyl)borate tris(4-iodophenyl)borate, tris(4-bromophenyl)borate, tris(4-chlorophenyl)borate, tris(4-fluorophenyl)borate, diethyl methyl borate, an ethyl dimethyl borate, and the like.

### [Acid Anhydride]

The acid anhydride is not particularly limited in the kinds, unless properties of the non-aqueous electrolyte solution and the secondary battery using the same of the present embodiment are impaired, and various acid anhydrides can be selected. Specifically, for example, a linear carboxylic anhydride such as an acetic anhydride, a propionic anhydride, a butyric anhydride, a valeric anhydride, a hexanoic anhydride, a heptanoic anhydride, an octanoic anhydride, a nonanoic anhydride, a decanoic anhydride, an eicosanoic anhydride, a docosanoic anhydride, a benzoic anhydride, a 4-methoxy benzoic anhydride, a diphenyl acetic anhydride, a crotonic anhydride, a cyclohexane carboxylic anhydride, an elaidic anhydride, an isobutyric anhydride, an isovaleric anhydride, a lauric anhydride, a linolic anhydride, a myristic anhydride, an angelic anhydride, a chlorodifluoro acetic anhydride, a trichloro acetic anhydride, a difluoro acetic anhydride, a trifluoro acetic anhydride, and a 4-trifluoromethyl benzoic anhydride; a cyclic carboxylic anhydride such as a phthalic anhydride, a 3-acetamide phthalic anhydride, a 4,4'-carbonyl diphthalic anhydride, a 4,4'-biphthalic anhydride, a 3-iodo phthalic anhydride, a 3-bromo phthalic anhydride, a 3-chloro phthalic anhydride, a 3-fluoro phthalic anhydride, a 4-iodo phthalic anhydride, a 4-bromo phthalic anhydride, a 4-chloro phthalic anhydride, a 4-chloro phthalic anhydride, a 4,5-diiodo phthalic anhydride, a 4,5-dibromo phthalic anhydride, a 4,5-dichloro phthalic anhydride, a 4,5-difluoro phthalic anhydride, a 4,4'-sulfonyl diphthalic anhydride, a 3-nitro phthalic anhydride, a 4-nitro phthalic anhydride, an exo-3,6-epoxy hexahydro phthalic anhydride, an exo-3,6-epoxy-1,2,3,6-tetrahydro phthalic anhydride, a tetraiodo phthalic anhydride, a tetrachloro phthalic anhydride, a tetrafluoro phthalic anhydride, a 4-tert-butyl phthalic anhydride, a 4-ethynyl phthalic anhydride, a 4,4'-(hexafluoro isopropyliden)diphthalic anhydride, a succinic anhydride, an (R)-(+)-2-acetoxy succinic anhydride, an (S)-(-)-2-acetoxy succinic anhydride, a 2-buten-1-yl succinic anhydride, a butyl succinic anhydride, a decyl succinic anhydride, a 2,3-dimethyl succinic anhydride, a 2-dodecen-1-yl succinic anhydride, a dodecyl succinic anhydride, octadecen succinic anhydride, a (2,7-octadien-1-yl) succinic anhydride, an n-octyl succinic anhydride, a hexadecyl succinic anhydride, a maleic anhydride, a 2,3-bis(2,4,5-trimethyl-3-thienyl)maleic anhydride, a 2-(-2-carboxyethyl)-3-methyl-maleic anhydride, a 2,3-dimethylmaleic anhydride, a 2,3-diphenylmaleic anhydride, a phenylmaleic anhydride, a 4-penten-1,2-dicarboxylic anhydride, a 2,3-anthracen dicarboxylic anhydride, a bicyclo[2,2,2]oct-5-en-2,3-dicarboxylic anhydride, a 4-bromo-1,8-naphthalene dicarboxylic anhydride, a (±)-trans-1,2-cyclohexane dicarboxylic anhydride, a cis-4-cyclohexen-1,2-dicarboxylic anhydride, a 2,5-dibromo-3,4-thiophen dicarboxylic anhydride, a 5,6-dihydro-1,4-dithyin-2,3-dicarboxylic anhydride, a 2,2'-biphenyl dicarboxylic anhydride, a 4-methylcyclohexan-1,2-dicarboxylic anhydride, a 3-methyl-4-cyclohexen-1,2-dicarboxylic anhydride, a 4-methyl-4-cyclohexen-1,2-dicarboxylic anhydride, a 2,3-naphthalene dicarboxylic anhydride, a 3,4-thiophene dicarboxylic anhydride, a 1,8-naphthalene dicarboxylic anhydride, a 5-norbornene-2,3-dicarboxylic anhydride, a 1,2-cyclopropane dicarboxylic anhydride, glutaric anhydride, a 3,3-pentamethylene glutaric anhydride, a 2,2-dimethyl glutaric anhydride, a 3,3-dimethyl glutaric anhydride, a 3-methyl glutaric anhydride, a 2-phthalimide glutaric anhydride, a 3,3-tetramethylene glutaric anhydride, N-methyl isatoic anhydride, a 4-iodo isatoic anhydride, a 4-bromo isatoic anhydride, a 4-chloro isatoic anhydride, a 4-fluoro isatoic anhydride, a 5-iodo isatoic anhydride, a 5-bromo isatoic anhydride, a 5-chloro isatoic anhydride, a 5-fluoro isatoic anhydride, itaconic anhydride, caronic anhydride, citraconic anhydride, diglycolic anhydride, a 1,2-naphthalic anhydride, pyromellitic anhydride, het anhydride, and a 2,2,3,3,4,4-hexafluoro pentanedioic anhydride; a linear sulfonic anhydride such as a trifluoromethane sulfonic anhydride, and a p-toluene sulfonic anhydride; a cyclic sulfonic anhydride such as a 2-sulfobenzoic anhydride, a tetraiodo-O-sulfobenzoic anhydride, a tetrabromo-O-sulfobenzoic anhydride, a tetrachloro-O-sulfobenzoic anhydride, and a tetrafluoro-O-sulfobenzoic anhydride; a linear phosphinic anhydride such as a diphenyl phosphinic acid; a cyclic phosphonic anhydride such as a 1-propane phosphonic anhydride; a 3,4-diiodophenyl boronic anhydride, a 3,4-dibromophenyl boronic anhydride, a 3,4-dichlorophenyl boronic anhydride, a 3,4-difluorophenyl boronic anhydride, a 4-iodophenyl boronic anhydride, a 4-bromophenyl boronic anhydride, a 4-chlorophenyl boronic anhydride, a 4-fluorophenyl boronic anhydride, (m-terphenyl boronic anhydride, a 3,4,5-triiodophenyl boronic anhydride, a 3,4,5-tribromophenyl boronic anhydride, a 3,4,5-trichlorophenyl boronic anhydride, a 3,4,5-trifluorophenyl boronic anhydride, and the like. Among these acid anhydrides, in the present embodiment, an acid anhydride having a cyclic structure is preferred, and further, an acid anhydride having an unsaturated bond in a molecule is preferred. Here, as an acid anhydride, a maleic anhydride is particularly preferred from the viewpoint of availability and the viewpoint of having a cyclic structure and an unsaturated bond in a molecule.

### [Cyclic Carbonate Having Unsaturated Bond]

The cyclic carbonate having an unsaturated bond is not particularly limited in the kinds, unless properties of the non-aqueous electrolyte solution and the secondary battery using the same of the present embodiment are impaired, and various cyclic carbonates can be selected. The number of the unsaturated bonds is preferably from 1 to 10, more preferably from 1 to 5, and particularly preferably from 1 to 3. Specifically, the cyclic carbonate having an unsaturated bond includes, for example, vinylene carbonate, iodovinylene carbonate, bromovinylene carbonate, chlorovinylene carbonate, fluorovinylene carbonate, 1,2-diiodovinylene carbonate, 1,2-dibromovinylene carbonate, 1,2-dichlorovinylene carbonate, 1,2-difluorovinylene carbonate, methyl vinylene carbonate, iodomethyl vinylene carbonate, bromomethyl vinylene carbonate, chloromethyl vinylene carbonate, fluoromethyl vinylene carbonate, dichloromethyl vinylene carbonate, dibromomethyl vinylene carbonate, dichloromethyl vinylene carbonate, difluoromethyl vinylene carbonate, triiodomethyl vinylene carbonate, tribromomethyl vinylene carbonate, trichloromethyl vinylene carbonate, trifluoromethyl vinylene carbonate, ethylvinylene carbonate, propyl vinylene carbonate, butyl vinylene carbonate, dimethyl vinylene carbonate, diethyl vinylene carbonate, dipropyl vinylene carbonate, vinyl ethylene carbonate, and the like. Here, as the cyclic carbonate having an unsaturated bond, a vinylene carbonate is preferred from the viewpoint of availability.

### [Cyclic Carbonate Having Halogen Atom]

The cyclic carbonate having a halogen atom is not particularly limited in the kind, unless properties of the non-aqueous electrolyte solution and the secondary battery using the same of the present embodiment are impaired, and various cyclic carbonates can be selected. Here, the halogen atom means a fluorine atom, a chlorine atom, a bromine atom or an iodine atom. Specifically, the cyclic carbonate having a halogen atom includes, for example, iodoethylene carbonate, bromoethylene carbonate, chloroethylene carbonate, fluoroethylene carbonate, 1,2-diiodoethylene carbonate, 1,2-dibromoethylene carbonate, 1,2-dichloroethylene carbonate, 1,2-difluoroethylene carbonate, and the like. Here, as the cyclic carbonate having an unsaturated bond, chloroethylene carbonate and fluoroethylene carbonate are preferred from the viewpoint of availability.

### [Cyclic Sulfonate]

The cyclic sulfonate is not particularly limited in the kind, unless properties of the non-aqueous electrolyte solution and the secondary battery using the same of the present embodiment are impaired, and various cyclic sulfonates can be selected. Specifically, the cyclic sulfonate includes, for example, 1,3-propanesultone, 2,4-butanesultone, 1,4-butanesultone, ethylene sulfite, and the like. Here, as the cyclic sulfonate, 1,3-propanesultone and ethylene sulfite are preferred from the viewpoint of availability.

### [Cyclic Sulfate]

The cyclic sulfate is not particularly limited in the kind, unless properties of the non-aqueous electrolyte solution and the secondary battery using the same of the present embodiment are impaired, and various cyclic sulfates can be selected. Specifically, the cyclic sulfate includes, for example, ethylene sulfate and the like.

### [Cyclic Sulfite]

The cyclic sulfite is not particularly limited in the kind, unless properties of the non-aqueous electrolyte solution and the secondary battery using the same of the present embodiment are impaired, and various cyclic sulfites can be selected. Specifically, the cyclic sulfate includes, for example, ethylene sulfite, 1,3-propylene sulfite, and the like.

### [Amines Having Acetoacetyl Group]

Specifically, the amines having an acetoacetyl group are a compound represented by the following chemical formula (3).

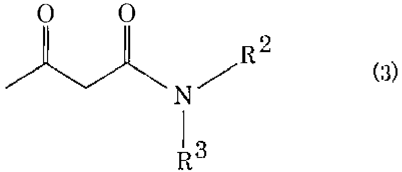

The R² and R³ each, independently, represents a hydrocarbon group having the number of carbon atoms of from 1 to 20, preferably from 1 to 10, and more preferably from 1 to 5, or a hydrocarbon group of which the number of carbon atoms ranges from 1 to 20, preferably from 1 to 10, and more preferably from 1 to 5 having a halogen atom, a heteroatom or an unsaturated bond. Here, the halogen atom means a fluorine atom, a chlorine atom, a bromine atom or an iodine atom. In addition, the heteroatom means an oxygen atom, a nitrogen atom or a sulfur atom.

The R² and R³ include, without being particularly limited to, for example, a linear alkyl group such as a methyl group, an ethyl group, a propyl group, a butyl group, an isopropyl group, a pentyl group, a hexyl group, a heptyl group, and an octyl group; a cyclic alkyl group such as a cyclopentyl group, and a cyclohexyl group; a linear halogen-containing alkyl group such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a hexafluoro-2-propyl group; a cyclic halogen-containing alkyl group such as a 2-iodocyclohexyl group, a 2-bromocyclohexyl group, a 2-chlorocyclohexyl group, and a 2-fluorocyclohexyl group; a linear alkenyl group such as a 2-propenyl group, an isopropenyl group, a 2-butenyl group, and a 3-butenyl group; a cyclic alkenyl group such as a 2-cyclopentenyl group, a 2-cyclohexenyl group, and a 3-cyclohexenyl group; a linear alkynyl group such as a 2-propinyl group, a 1-butynyl group, a 2-butynyl group, a 3-butynyl group, a 1-pentynyl group, a 2-pentynyl group, a 3-pentynyl group, and a 4-pentynyl group; a phenyl group such as a phenyl group, a 3-methoxyphenyl group, a 4-methoxyphenyl group, a 3,5-dimethoxyphenyl group, and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; a naphthyl group such as 1-naphthyl group, a 2-naphthyl group, and a 3-amino-2-naphthyl group, and the like.

The R² and R³ are independent to each other, and may be same species or different species. In addition, the specific example of the group of the functional groups mentioned above is a mere exemplification, and the present embodiment is not limited thereto.

The specific example of the compound represented by the chemical formula (3) includes N,N-dimethyl acetacetamide, N,N-diethyl acetacetamide, N,N-dipropyl acetacetamide, N,N-dibutyl acetacetamide, N,N-ethylmethyl acetacetamide, N,N-methylpropyl acetacetamide, N,N-butylmethyl acetacetamide, and the like. However, the specific example of these compounds is a mere exemplification, and the present embodiment is not limited thereto.

### [Phosphorous Compound Represented by Chemical Formula (4)]

The phosphorous compound includes compounds represented by the following chemical formula (4).

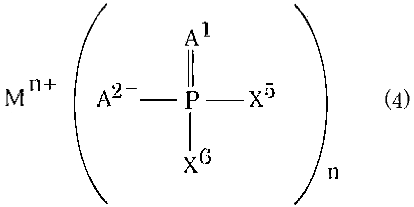

In the chemical formula (4), the Mⁿ⁺ is as already explained, and represents an alkali metal ion, an alkaline-earth metal ion, an aluminum ion, a transition metal ion or an onium ion. In addition, the n represents a valency, as the case of the chemical formula (1). Accordingly, the detailed explanation thereof is omitted.

The A¹ and A² each, independently, represents an oxygen atom, a sulfur atom or a selenium atom.

In the chemical formula (4), the X⁵ and X⁶ each, independently, represents a halogen atom, an alkyl group, or an alkyl group having at least any one of a halogen atom, a heteroatom or an unsaturated bond (hereinafter, "an alkyl group having a halogen atom or the like"). The number of carbon atoms of the alkyl group and an alkyl group having a halogen atom or the like is within the range of from 1 to 20, and preferably from 1 to 10, and more preferably from 1 to 4. In addition, the number of the unsaturated bonds is preferably within the range of from 1 to 10, more preferably within the range of from 1 to 5, and particularly preferably within the range of from 1 to 3.

The alkyl group or the alkyl group having a halogen atom or the like specifically includes, for example, a linear alkyl group such as a methyl group, an ethyl group, a propyl group, a butyl group, an isopropyl group, a pentyl group, a hexyl group, a heptyl group, and an octyl group; a cyclic alkyl group such as a cyclopentyl group, and a cyclohexyl group; a linear halogen-containing alkyl group such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a hexafluoro-2-propyl group; a cyclic halogen-containing alkyl group such as a 2-iodocyclohexyl group, a 2-bromocyclohexyl group, a 2-chlorocyclohexyl group, and a 2-fluorocyclohexyl group; a linear alkenyl group such as a 2-propenyl group, isopropenyl group, a 2-butenyl group, and a 3-butenyl group; a cyclic alkenyl group such as a 2-cyclopentenyl group, a 2-cyclohexenyl group, and a 3-cyclohexenyl group; a linear alkynyl group such as a 2-propinyl group, a 1-butynyl group, a 2-butynyl group, a 3-butynyl group, a 1-pentynyl group, a 2-pentynyl group, a 3-pentynyl group, and a 4-pentynyl group; a phenyl group such as a phenyl group, a 3-methoxyphenyl group, a 4-methoxyphenyl group, a 3,5-dimethoxyphenyl group, and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; a naphthyl group such as 1-naphthyl group, a 2-naphthyl group, and a 3-amino-2-naphthyl group, and the like.

Here, the halogen atom and the heteroatom are same as described with respect to the chemical formula (1). In addition, in the alkyl group having a halogen atom or the like, as to the halogen atom and the heteroatom, a part or a whole of hydrogens in the alkyl group may be substituted with any of these halogen atoms and/or heteroatoms.

In addition, as to the X⁵ and X⁶, any of the alkyl group, or the alkyl group having a halogen atom or the like may be bound to each other to form a cyclic structure. In this case, the alkyl group or the alkyl group having a halogen atom or the like in the X⁵ and X⁶ includes, for example, a linear alkylene group such as a methylene group, an ethylene group, a propylene group, a butylene group, a pentylene group, a hexylene group, a heptylene group, an octylene group, and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group, and a tetrafluoroethylene group; a cyclic hydrocarbon group such as a cyclohexylene group, a phenylene group, a benzylene group, a naphthylene group, an anthracylene group, a naphthacylene group, and a pentasylene group, an alkyl group of which a part or a whole is replaced with a halogen atom or the like, and the like.

In the group of functional groups exemplified above, the X⁵ and X⁶⁺ may be same kind or different to each other. In addition, the group of functional groups exemplified above is a mere exemplification, without being limited thereto.

The specific example of the phosphorous compound represented by the chemical formula (4) includes, for example, lithium diiodophosphate, lithium dibromophosphate, lithium dichlorophosphate, lithium difluorophosphate, sodium diiodophosphate, sodium dibromophosphate, sodium dichlorophosphate, sodium difluorophosphate, potassium diiodophosphate, potassium dibromophosphate, potassium dichlorophosphate, potassium difluorophosphate, and the like.

[Phosphorous Compound Represented by Chemical Formula (5)] Next, a phosphorous compound represented by the following chemical formula (5) is explained. However, explanation of ones same as explained in the phosphorous compound represented by the chemical formula (4) is omitted.

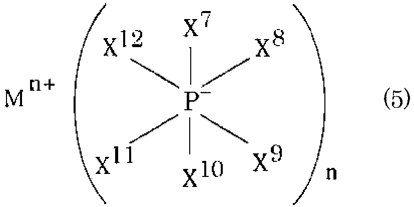

In the chemical formula (5), the Mⁿ⁺ and the valency n are same as that described in the chemical formula (4).

In the chemical formula (5), the X⁷ to X¹² each, independently, represents a halogen atom, an alkyl group, an alkoxy group, an alkylthio group, an alkyl group having at least any one of a halogen atom, a heteroatom or an unsaturated bond (hereinafter, referred to as "alkyl group having a halogen atom or the like"), an alkoxy group having at least any one of a halogen atom, a heteroatom or an unsaturated bond (hereinafter, referred to as "alkoxy group having a halogen atom or the like"), or an alkylthio group having at least any one of a halogen atom, a heteroatom or an unsaturated bond (hereinafter, referred to as "alkylthio group having a halogen atom or the like"). The number of carbon atoms of the alkyl group, the alkoxy group, the alkylthio group, the alkyl group having a halogen atom or the like, the alkoxy group having a halogen atom or the like and the alkylthio group having a halogen atom or the like is within the range of from 1 to 20, preferably from 1 to 10, and more preferably from 1 to 4. In addition, the number of the unsaturated bonds is preferably within the range of from 1 to 10, more preferably within the range of from 1 to 5, and particularly preferably within the range of from 1 to 3.

The halogen atom and the heteroatom are same as those described in the chemical formula (1). In addition, in the alkyl group having a halogen atom or the like, the alkoxy group having a halogen atom or the like and the alkylthio group having a halogen atom or the like, a part or a whole of hydrogen atoms in these functional groups may be substituted with these halogen atoms and/or heteroatoms.

The X⁷ to X¹² specifically include, for example, a linear alkyl group such as a methyl group, an ethyl group, a propyl group, a butyl group, an isopropyl group, a pentyl group, a hexyl group, a heptyl group, and an octyl group; a cyclic alkyl group such as a cyclopentyl group, and a cyclohexyl group; a linear halogen-containing alkyl group such as an iodomethyl group, a bromomethyl group, a chloromethyl group, a fluoromethyl group, a diiodomethyl group, a dibromomethyl group, a dichloromethyl group, a difluoromethyl group, a triiodomethyl group, a tribromomethyl group, a trichloromethyl group, a trifluoromethyl group, a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a 1,1,1,3,3,3-hexafluoro-2-propyl group; a cyclic halogen-containing alkyl group such as a 2-iodocyclohexyl group, a 2-bromocyclohexyl group, a 2-chlorocyclohexyl group, and a 2-fluorocyclohexyl group; a linear alkenyl group such as a 2-propenyl group, isopropenyl group, a 2-butenyl group, and a 3-butenyl group; a cyclic alkenyl group such as a 2-cyclopentenyl group, a 2-cyclohexenyl group, a 3-cyclohexenyl group; a linear alkynyl group such as a 2-propinyl group, a 1-butynyl group, a 2-butynyl group, a 3-butynyl group, a 1-pentynyl group, a 2-pentynyl group, a 3-pentynyl group, and a 4-pentynyl group; a phenyl group such as a phenyl group, a 3-methoxyphenyl group, a 4-methoxyphenyl group, a 3,5-dimethoxyphenyl group, and a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; a linear alkoxy group such as a methoxy group, an ethoxy group, a propoxy group, a butoxy group, a pentoxy group, and a hexoxy group; a cyclic alkoxy group such as a cyclopentoxy group, and a cyclohexoxy group; a linear halogen-containing alkyl group such as a 2-iodoethoxy group, a 2-bromoethoxy group, a 2-chloroethoxy group, a 2-fluoroethoxy group, a 1,2-diiodoethoxy group, a 1,2-dibromoethoxy group, a 1,2-dichlorothoxy group, a 1,2-difluoroethoxy group, a 2,2-diiodoethoxy group, a 2,2-dibromoethoxy group, a 2,2-dichloroethoxy group, a 2,2-difluoroethoxy group, a 2,2,2-tribromoethoxy group, a 2,2,2-trichloroethoxy group, a 2,2,2-trifluoroethoxy group, and a 1,1,1,3,3,3-hexafluoro-2-propoxy group; a cyclic halogen-containing alkyl group such as a 2-iodocyclohexoxy group, a 2-bromocyclohexoxy group, a 2-chlorocyclohexoxy group, and a 2-fluorocyclohexoxy group; a linear alkenylalkoxy group such as a 2-propenoxy group, isopropenoxy group, a 2-butenoxy group, and a 3-butenoxy group; a cyclic alkenylalkoxy group such as a 2-cyclopentenoxy group, a 2-cyclohexenoxy group, a 3-cyclohexenoxy group; a linear alkynylalkoxy group such as a 2-propynoxy group, a 1-butynoxy group, a 2-butynoxy group, a 3-butynoxy group, a 1-pentynoxy group, a 2-pentynoxy group, a 3-pentynoxy group, and a 4-pentynoxy group; a phenoxy group such as a phenoxy group, a 3-methylphenoxy group, a 4-methylphenoxy group, and a 3,5-dimethylphenoxy group; a halogen-containing phenoxy group such as a 2-iodophenoxy group, a 2-bromophenoxy group, a 2-chlorophenoxy group, a 2-fluorophenoxy group, a 3-iodophenoxy group, a 3-bromophenoxy group, a 3-chlorophenoxy group, a 3-fluorophenoxy group, a 4-iodophenoxy group, a 4-bromophenoxy group, a 4-chlorophenoxy group, a 4-fluorophenoxy group, a 3,5-diiodophenoxy group, a 3,5-dibrophenoxy group, a 3,5-dichlorophenoxy group, and a 3,5-difluorophenoxy group; an alkylthio group such as a methylthio group, an ethylthio group, a propylthio group, a butylthio group, an iopropylthio group, a pentylthio group, and a hexylthio group, and the like.

In addition, an optionally selected at least one combination of the X⁷ to X¹² may form any of cyclic structures of -OOC-COO-, -OOCO-, -OOC-Z-COO-, -OOC-Z-O- or -O-Z-O-. In the case where the X⁷ to X¹² form two or more cyclic structures, the cyclic structures may be identical to or different from each other. In addition, the Z represents a hydrocarbon group having the number of carbon atoms of from 1 to 20, or a hydrocarbon group of which the number of carbon atoms ranges from 1 to 20 having at least any one of a halogen atom, a heteroatom, an unsaturated bond or a cyclic structure. In addition, the number of the unsaturated bonds is preferably within the range of from 1 to 10, more preferably within the range of from 1 to 5, and particularly preferably within the range of from 1 to 3.

The Z specifically includes, without being particularly limited to, for example, a linear alkylene group such as a methylene group, an ethylene group, a propylene group, a butylene group, a pentylene group, a hexylene group, a heptylene group, an octylene group, and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group, and a tetrafluoroethylene group; a cyclic hydrocarbon group such as a cyclohexylene group, a phenylene group, a benzylene group, a naphthylene group, an anthracylene group, a naphthacylene group, and a pentasylene group, ones having a part or a whole thereof relaced to a halogen, and the like.

In addition, in the case where the Z is a 1,2-phenylene group, -O-Z-O- represents a benzenediolato group, and -O-Z-COO- represents a salicylato group.

Here, the specific example of the phosphorous compound represented by the chemical formula (5) includes, for example, a lithium difluoro bis(oxalato)phosphate, sodium difluoro bis(oxalato)phosphate, lithium tetrafluoro(oxalato)phosphate, sodium tetrafluoro(oxalato)phosphate, and the like.

### [Phosphorous Compound Represented by Chemical Formula (6)]

Next, the phosphorous compound represented by the following chemical formula (6) is explained. However, explanation of ones same as explained in the phosphorous compound represented by the chemical formula (4) is omitted.

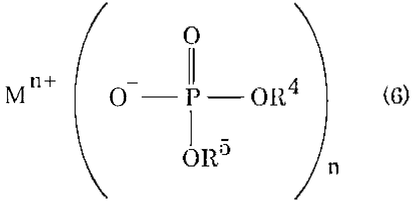

In the chemical formula (6), the Mⁿ⁺ and the valency n are same as described in the chemical formula (4).

In the chemical formula (6), the R⁴ and R⁵ each, independently, represents a hydrocarbon group, or a hydrocarbon group having a halogen atom, a heteroatom or an unsaturated bond (hereinafter, referred to as "hydrocarbon group having a halogen atom or the like"). The number of carbon atoms of the hydrocarbon group is from 1 to 20, preferably from 1 to 10, and more preferably from 1 to 4. In addition, the number of carbon atoms of a hydrocarbon group having a halogen atom or the like is from 1 to 20, preferably from 1 to 10, and more preferably from 1 to 4. In addition, the number of the unsaturated bonds is preferably within the range from 1 to 10, more preferably within the range from 1 to 5, and particularly preferably within the range from 1 to 3.

The hydrocarbon group or the hydrocarbon group having a halogen atom or the like specifically includes, for example, a linear alkyl group such as a methyl group, an ethyl group, a propyl group, a butyl group, an isopropyl group, a pentyl group, a hexyl group, a heptyl group, and an octyl group; a cyclic alkyl group such as a cyclopentyl group, and a cyclohexyl group; a linear halogen-containing alkyl group such as a 2-iodoethyl group, a 2-bromoethyl group, a 2-chloroethyl group, a 2-fluoroethyl group, a 1,2-diiodoethyl group, a 1,2-dibromoethyl group, a 1,2-dichloroethyl group, a 1,2-difluoroethyl group, a 2,2-diiodoethyl group, a 2,2-dibromoethyl group, a 2,2-dichloroethyl group, a 2,2-difluoroethyl group, a 2,2,2-tribromoethyl group, a 2,2,2-trichloroethyl group, a 2,2,2-trifluoroethyl group, and a 1,1,1,3,3,3-hexafluoro-2-propyl group; a cyclic halogen-containing alkyl group such as a 2-iodocyclohexyl group, a 2-bromocyclohexyl group, a 2-chlorocyclohexyl group, and a 2-fluorocyclohexyl group; a linear alkenyl group such as a 2-propenyl group, an isopropenyl group, a 2-butenyl group, and a 3-butenyl group; a cyclic alkenyl group such as a 2-cyclopentenyl group, a 2-cyclohexenyl group, and a 3-cyclohexenyl group; a linear alkynyl group such as a 2-propinyl group, a 1-butynyl group, a 2-butynyl group, a 3-butynyl group, a 1-pentynyl group, a 2-pentynyl group, a 3-pentynyl group, and a 4-pentynyl group; a phenyl group such as a phenyl group, a 3-methoxyphenyl group, a 4-methoxyphenyl group, a 3,5-dimethoxyphenyl group, a 4-phenoxyphenyl group; a halogen-containing phenyl group such as a 2-iodophenyl group, a 2-bromophenyl group, a 2-chlorophenyl group, a 2-fluorophenyl group, a 3-iodophenyl group, a 3-bromophenyl group, a 3-chlorophenyl group, a 3-fluorophenyl group, a 4-iodophenyl group, a 4-bromophenyl group, a 4-chlorophenyl group, a 4-fluorophenyl group, a 3,5-diiodophenyl group, a 3,5-dibromophenyl group, a 3,5-dichlorophenyl group, and a 3,5-difluorophenyl group; a naphthyl group such as 1-naphthyl group, a 2-naphthyl group, and a 3-amino-2-naphthyl group, and the like.

Here, the halogen atom and the heteroatom are same as described in the chemical formula (1). In the hydrocarbon group having a halogen atom or the like, a part or a whole of hydrogen in the hydrocarbon group may be substituted with any of these halogen atoms and/or heteroatoms.

In the group of the functional groups exemplified above, the R⁴ and R⁵ may be same kind or different from each other. In addition, the group of the functional groups exemplified above is a mere exemplification, without being limited thereto.

Further, the R⁴ and R⁵ may be any of the hydrocarbon group, or the hydrocarbon group having a halogen atom or the like, and may be bound to each other to form a cyclic structure. In this case, the hydrocarbon group or the hydrocarbon group having a halogen atom or the like specifically includes a linear alkylene group such as a methylene group, an ethylene group, a propylene group, a butylene group, a pentylene group, a hexylene group, a heptylene group, an octylene group, and a nonylene group; a halogen-containing linear alkylene group such as an iodomethylene group, a diiodomethylene group, a bromomethylene group, a dibromomethylene group, a fluoromethylene group, a difluoromethylene group, an iodoethylene group, a 1,1-diiodoethylene group, a 1,2-diiodoethylene group, a triiodoethylene group, a tetraiodoethylene group, a chloroethylene group, a 1,1-dichloroethylene group, a 1,2-dichloroethylene group, a trichloroethylene group, a tetrachloroethylene group, a fluoroethylene group, a 1,1-difluoroethylene group, a 1,2-difluoroethylene group, a trifluoroethylene group, and a tetrafluoroethylene group; a cyclic hydrocarbon group such as a cyclohexylene group, a phenylene group, a benzylene group, a naphthylene group, an anthracylene group, a naphthacylene group, and a pentasylene group, ones having a part or a whole thereof replaced to a halogen atom or the like, and the like.

The specific example of the phosphorous compound represented by the chemical formula (6) includes, for example, a lithium diethyl phosphate, lithium bis(2,2,2-trifluoroethyl)phosphate, and the like.

### [Sulfonylimide Salts]

The sulfonylimide salts are not particularly limited in the kinds, unless properties of the non-aqueous electrolyte solution and the secondary battery using the same of the present embodiment are impaired, and various sulfonylimide salts can be selected. The sulfonylimide salts specifically include, for example, lithium bis(fluorosulfonyl)imide, lithium bis(trifluoromethanesulfonyl)imide, and the like.

### [Sulfonates]

The sulfonates are not particularly limited in the kinds, unless the properties of the non-aqueous electrolyte solution and the secondary battery using the same of the present embodiment are impaired, and various sulfonates can be selected. The sulfonates specifically include, for example, lithium fluorosulfonate, lithium methane sulfonate, lithium trifluoromethane sulfonate, and the like.

### [Dinitriles]

The dinitriles are not particularly limited in the kinds, unless properties of the non-aqueous electrolyte solution and the secondary battery using the same of the present embodiment are impaired, and various dinitriles can be selected. The dinitriles specifically include, for example, succinonitrile, fumaronitrile, adiponitrile and the like.

The content of the component (B) based on the total mass of the non-aqueous electrolyte solution is preferably within the range from 0.05 to 5% by mass, more preferably within the range from 0.07 to 3% by mass, and particularly preferably within the range from 0.10 to 2% by mass. Cyclic property under a high temperature environment of the secondary battery can be further improved by adjusting the added amount to 0.05% by mass or more and containing at least one component (A) as an additional additive. On the other hand, the decrease of solubility to the non-aqueous electrolyte solution solvent of an electrolyte in the non-aqueous electrolyte solution can be suppressed by adjusting the added amount to 5% by mass or less.

In addition, in the present embodiment, at least one component (B) has to be contained in the non-aqueous electrolyte solution, and the number of kinds of the component (B) to be contained is preferably from 1 to 5, more preferably from 1 to 3, and particularly preferably from 1 to 2. Complexity of the step upon production of the non-aqueous electrolyte solution can be suppressed by reducing the kinds of the component (B).

### < Electrolyte >

As the electrolyte, a conventionally known electrolyte can be taken, and the cation constituting a salt of the electrolyte may be appropriately selected depending on the kinds of non-aqueous secondary battery. For example, a lithium ion is used in the case of a lithium ion secondary battery, a sodium ion is used in the case of a sodium ion secondary battery, a potassium ion is used in the case of a potassium ion secondary battery, a magnesium ion is used in the case of a magnesium ion secondary battery, and a calcium ion is used in the case of a calcium ion secondary battery.

The anion constituting a salt of the electrolyte is preferably an anion containing fluorine. The specific example of the fluorine-containing anion includes, for example, BF₄⁻, PF₆⁻, BF₃CF₃⁻, BF₃C₂F₅⁻, CF₃SO₃⁻, C₂F₅SO₃⁻, C₃F₇SO₃⁻, C₄F₉SO₃⁻, N(SO₂F)₂⁻, N(CF₃SO₂)₂ , N(C₂F₅SO₂)₂⁻, N(CF₃SO₂)(CF₃CO)⁻, N(CF₃SO₂)(C₂F₅SO₂)⁻, C(CF₃SO₂)₃⁻ and the like. These can be used alone or in combination of two or more kinds. Among fluorine-containing anions, from the viewpoints of improving safety and stability of non-aqueous electrolyte solution, electric conductivity and cyclic property, BF₄⁻, PF₆⁻, N(SO₂F)₂⁻ and N(CF₃SO₂)₂⁻ are preferred, and BF₄⁻, PF₆⁻ and N(SO₂F)₂⁻ are particularly preferred.

The concentration of the electrolyte to the organic solvent is, without being particularly limited to, generally from 0.1 to 4.0 M, preferably from 0.2 to 2.0 M, more preferably from 0.2 to 1.5 M, and particularly preferably from 0.3 to 1.2 M. Insufficiency of electric conductivity of the non-aqueous electrolyte solution can be prevented by adjusting the concentration to 0.1 M or more. On the other hand, the decrease of electric conductivity due to the increase of viscosity of the non-aqueous electrolyte solution can be suppressed to prevent the decrease of properties of the secondary battery by adjusting the concentration to 4.0 M or less.

### < Organic Solvent >

The organic solvent (non-aqueous solvent) used in the non-aqueous electrolyte solution includes, without being particularly limited to, for example, a cyclic carbonate, a linear carbonate, a phosphate, a cyclic ether, a linear ether, a fluorinated ether, a lactone compound, a linear ester, a nitril compound, an amide compound, a sulfone compound, an ionic liquid, and the like. Among these organic solvents, a carbonate is preferred from the viewpoint that it is generally used as an organic solvent for the lithium secondary battery.

The cyclic carbonate includes, without being particularly limited to, for example, ethylene carbonate, propylene carbonate, butylene carbonate, and the like. Among them, cyclic carbonate such as ethylene carbonate or propylene carbonate is preferred from the viewpoint of improving charging efficiency of the lithium secondary battery. The linear carbonate includes, without being particularly limited to, for example, dimethyl carbonate, ethyl methyl carbonate, diethyl carbonate, and the like. Among them, dimethyl carbonate or an ethyl methyl carbonate is preferred from the viewpoint of improving charging efficiency of the lithium secondary battery. The phosphate includes, without being particularly limited to, for example, trimethyl phosphate, triethyl phosphate, ethyl dimethyl phosphate, diethyl methyl phosphate, tris(2,2,2-trifluoroethyl)phosphate, tris(2,2,3,3-tetrafluoropropyl)phosphate, tris(2,2,3,3,3-pentafluoropropyl)phosphate, dimethyl(2,2,2-trifluoroethyl)phosphate, methyl bis(2,2,2-trifluoroethyl)phosphate, dimethyl(2,2,3,3-tetrafluoropropyl)phosphate, methyl bis(2,2,3,3-tetrafluoropropyl)phosphate, diethyl(2,2,2-trifluoroethyl)phosphate, ethyl bis(2,2,2-trifluoroethyl)phosphate, diethyl(2,2,3,3-tetrafluoropropyl)phosphate, ethyl bis(2,2,3,3-tetrafluoropropyl)phosphate, and the like. The cyclic ether includes, without being particularly limited to, for example, tetrahydrofuran, 2-methyl tetrahydrofuran, and the like. The linear ether includes, without being particularly limited to, for example, dimethoxyethane and the like. The fluorinated ether includes, without being particularly limited to, for example, a methyl 1,1,2,2-tetrafluoroethyl ether, an ethyl 1,1,2,2-tetrafluoroethyl ether, a 1,1,2,2-tetrafluoroethyl 2,2,2-trifluoroethyl ether, a 1,1,2,2-tetrafluoroethyl 2,2,3,3-tetrafluoropropyl ether, a 1H,1H,5H-octafluoropentyl-1,1,2,2-tetrafluoroethyl ether, a 2,2,3,3,3-pentafluoropropyl-1,1,2,2-tetrafluoroethyl ether, a methyl 2,2,3,3,3-pentafluoropropyl ether, a difluoromethyl-2,2,3,3-tetrafluoropropyl ether, a methyl 1,1,2,3,3,3-hexafluoropropyl ether, an ethyl 1,1,2,3,3,3-hexafluoropropyl ether, a methyl nonafluorobutyl ether, an ethyl nonafluorobutyl ether, a 2,2-difluoroethyl-1,1,2,2-tetrafluoroethyl ether, a bis(2,2,2-trifluoroethyl)ether, a hexafluoroisopropyl methyl ether, a fluoromethyl-1,1,1,3,3,3-hexafluoroisopropyl ether, a 1,1,2,3,3,3-hexafluoropropyl-2,2-difluoroethyl ether, a 1,1,2,3,3,3-hexafluoropropyl-2,2,2-trifluoroethyl ether, a bis(2,2-difluoroethyl)ether, a bis(2,2,3,3-tetrafluoropropyl)ether, a bis(2,2,3,3-tetrafluoropropyl)ether, a bis(2,2,3,3,3-pentafluoropropyl)ether and the like. The lactone compound includes, without being particularly limited to, for example, γ-butyrolactone and the like. The linear ester includes, without being particularly limited to, for example, a methyl propionate, a methyl acetate, an ethyl acetate, a methyl formate, and the like. The nitril compound includes, without being particularly limited to, for example, acetonitrile and the like. The amide compound includes, without being particularly limited to, for example, dimethyl formamide and the like. The sulfone compound includes, without being particularly limited to, for example, sulfolane, methylsulfolane, and the like. The ionic liquid includes, without being particularly limited to, for example, 1-ethyl-3-methylimidazoliumtetrafluoro borate, 1-ethyl-3-methylimidazolium bis(fluorosulfonyl)imide, 1-methyl-1-propylpyrrolidinium bis(fluorosulfonyl)imide, 1-methyl-1-propylpyrrolidinium bis(trifluoromethanesulfonyl)imide, and the like. In addition, a compound in which at least a part of hydrogens in the hydrocarbon groups contained in the organic solvent molecule is substituted with fluorine can be suitably used. These organic solvents may be used alone or in combination of two or more kinds.

In addition, as the organic solvent, a carbonate is preferably used from the viewpoints of availability and performances.

### < Others >

Other conventionally known additives may be added to the non-aqueous electrolyte solution according to the present embodiment. In this case, the amount added of other additives can be appropriately set as needed.

### (Secondary Battery)

Next, as the secondary battery of the present invention, a lithium ion secondary battery is exemplified and an explanation is made hereinafter. FIG. 1 is a cross-sectional schematic diagram showing an overview of the lithium ion secondary battery provided with the non-aqueous electrolyte solution.

The lithium ion secondary battery according to the present embodiment has a structure containing a laminate in which a positive electrode 1, a separator 3, a negative electrode 2, and a spacer 7 are laminated in this order from a positive electrode can 4 side in an internal space formed of the positive electrode can 4 and a negative electrode can 5, as shown in FIG. 1. A spring 8 is intervened between the negative electrode can 5 and the spacer 7, thereby properly pressure bonding the positive electrode 1 and the negative electrode 2. The non-aqueous electrolyte solution containing a group of compounds of the component (A) and the component (B) of the present embodiment is immerse between the positive electrode 1, the separator 3 and the negative electrode 2. The positive electrode can 4 and the negative electrode can 5 are sandwiched in the state in which a gasket 6 is intervened between the positive electrode can 4 and the negative electrode can 5, thereby bonding both to make the laminate tightly closed.

The material of the positive electrode active material in the positive electrode 1 includes, without being particularly limited to, in the case of the lithium ion secondary battery, for example, a transition metal compound containing a structure in which a lithium ion can diffuse, or an oxide of the transition metal compound and a lithium. Specifically, an oxide such as LiCoO₂, LiNiO₂, LiMn₂O₄, Li₂MnO₃+LiMeO₂ (Me = at least one or more metal atoms of Mn, Co, Ni and Fe) solid solution, LiFePO₄, LiCoPO₄, LiMnPO₄, Li₃V₂(PO₄)₃, Li₂MePO₄F (Me = Fe, Co), LiVPO₄F, Li₂MeSiO₄ (Me = at least one or more metal atom of Fe, Mn and Co), FeCoOF, LiCoₓMe_{y}O₂ (0 < x < 1, 0 < y < 1, x + y = 1, Me = at least one or more metal atom of Sn, Mg, Al, Fe, Zr, V, Ga, Zn, Cu, Ni, Mn, Ti, Zr and Cr), Li(LiₐMe_{y}Mn_{z})O₂ (0 < a ≤ 0.2, 0 < y ≤ 0.6, 0 < z ≤ 0.6, x + y + z = 1, Me = at least one or more metal atom of Al, Ti, Cr, Ni and Co), Li(LiₐMeₓMn_{y})O_{z}F_{b} (0 < a ≤ 0.2, 0 < b ≤ 1, 0 < x ≤ 0.6, 0 < y ≤ 0.6, 0 < z < 4, a + x +y = 2, b + z = 4, Me = at least one or more metal atom of Al, Ti, Cr, Ni, Co, Fe and Mg), LiMeₓMn_{y}O₄ (0 < x < 2, 0 < y < 2, x + y = 2, Me = at least one or more metal atom of Cr, Fe, Co, Ni, Mg, Cu, Ti and Al), LiNiₓMn_{y}O2 (0 < x < 1, 0 < y < 1, x + y = 1), Li(LiₐNiₓCo_{y}Mn_{z})O₂ (0 ≤ a ≤ 0.2, 0 < x < 1, 0 < y < 1, 0 < z < 1, a + x + y + z = 1), LiNiₓCoyAl_{z}O₂ (0 < x < 1,0 < y < 1,0 < z < 1, x + y + z = 1), or LiFeF₃, LiMeBO₃ (Me = at least one or more metal atom of Mn and Fe), TiO₂, V₂O₅, MoO₃, Cr₃O₈, WO₃; a sulfide such as MnS₂, TiS₂, FeS or MoS₂; or an electrically conductive polymer such as polyacetylene, poly(paraphenylene), polyaniline, polypyrrole, polythiophene, polyacene, or dimercapto thiadiazole; an organic sulfur such as organic disulfide, carbon sulfide or active sulfur; an activated carbon, a polymer generating a radical, a carbon material, or the like is used. Among the exemplified positive electrode active material, an oxide containing two transition metals and an oxide containing three transition metals are preferred in the present embodiment.

The oxide containing two transition metals includes, without being particularly limited to, for example, LiNiₓ₁Co_{y1}O_{z1} (0 < x1< 2, 0 < y1 < 2, 2 ≤ z1 ≤ 4, 1 ≤ x1 + y1 ≤ 2), LiNix2Mny2Oz2 (0 < x2 < 2, 0 < y2 < 2, 2 ≤ z2 ≤ 4, 1 ≤ x2 + y2 ≤ 2), LiCox3Mny3Oz3 (0 < x3 < 2, 0 < y3 < 2, 2 ≤ z3 ≤ 4, 1 ≤ x3 + y3 ≤ 2), and the like. A part of oxygen of these oxides containing two transition metals may be replaced with other non-metal ions such as a phosphate, a borate or a fluorine ion.

In the oxide containing two transition metals consisting of the LiNiₓ₁Co_{y1}O_{z1} and LiNiₓ₂Mn_{y2}O_{z2}, x1 and x2 represent a composition ratio of nickel in the oxide containing two transition metals. Each of x1 and x2 is within the range of more than 0 and less than 2, preferably within the range of 0.1 or more and 1.9 or less, and more preferably within the range of 0.5 or more and 1.5 or less. The x1 and x2 can be controlled by adjusting the amount supplied of nickel when producing a positive electrode active material. In addition, y1 represents a composition ratio of a cobalt in the oxide containing two transition metals. The y1 is within the range of more than 0 and less than 2, preferably within the range of 0.1 or more and 1.9 or less, and more preferably within the range of 0.5 or more and 1.5 or less. The y1 can be controlled by adjusting the amount supplied of cobalt when producing a positive electrode active material. The y2 represents a composition ratio of a manganese in the oxide containing two transition metals. The y2 is within the range of more than 0 and less than 2, preferably within the range of 0.1 or more and 1.9 or less, and more preferably within the range of 0.5 or more and 1.5 or less. The y2 can be controlled by adjusting the amount supplied of manganese when producing a positive electrode active material. Here, the oxide containing two transition metals consisting of LiNiₓ₂Mn_{y2}O_{z2} is preferably LiNi_{0.5}Mn_{1.5}O₄ from the viewpoints of availability and properties of the battery.

In the oxide containing two transition metals consisting the LiCoₓ₃Mn_{y3}O_{z3}, x3 represents a composition ratio of a cobalt in the oxide containing two transition metals. The x3 is within the range of more than 0 and less than 2, preferably within the range of 0.1 or more and 1.9 or less, and more preferably within the range of 0.5 or more and 1.5 or less. The x3 can be controlled by adjusting the amount supplied of cobalt when producing a positive electrode active material. The y3 represents a composition ratio of a manganese in the oxide containing two transition metals. The y3 is within the range of more than 0 and less than 2, preferably within the range of 0.1 or more and 1.9 or less, and more preferably within the range of 0.5 or more and 1.5 or less. The y3 can be controlled by adjusting the amount supplied of manganese when producing a positive electrode active material.

The oxide containing three transition metals includes LiNiₓ₄Co_{y4}Mn_{z4}O₂ (0 < x4 < 1, 0 < y4 < 1, 0 < z4 < 1, x4 + y4 + z4 = 1) and LiNiₓ₅Co_{y5}Al_{z5}O₂ (0 < x5 < 1, 0 < y5 < 1, 0 < z5 < 1, x5 + y5 + z5 = 1). A part of oxygen of these oxides containing three transition metals may be replaced with other non-metal ions such as phosphate, borate or fluorine.

In the oxide containing three transition metals consisting of the LiNiₓ₄Co_{y4}Mn_{z4}O₂, the x4 represents a composition ratio of a nickel in the oxide containing three transition metals. The x4 is within the range of more than 0 and less than 1, preferably within the range of 0.6 or more and less than 1, and more preferably within the range of 0.6 or more and 0.9 or less. The x4 can be controlled by adjusting the amount supplied of nickel when producing a positive electrode active material. In addition, the y4 represents a composition ratio of a cobalt in the oxide containing three transition metals. The y4 is within the range of more than 0 and less than 1, preferably within the range of 0.05 or more and 0.2 or less, and more preferably within the range of 0.05 or more and 0.1 or less. The y4 can be controlled by adjusting the amount supplied of cobalt when producing a positive electrode active material. In addition, z4 represents a composition ratio of a manganese in the oxide containing three transition metals. The z4 is within the range of more than 0 and less than 1, preferably within the range of 0.05 or more and 0.2 or less, and more preferably within the range of 0.05 or more and 0.1 or less. The z4 can be controlled by adjusting the amount supplied of manganese when producing a positive electrode active material.

In the oxide containing three transition metals consisting of the LiNiₓ₅Co_{y5}Al_{z5}O₂, the x5 represents a composition ratio of a nickel in the oxide containing three transition metals. The x5 is within the range of more than 0 and less than 1, preferably within the range of 0.6 or more and less than 1, and more preferably within the range of 0.6 or more and 0.9 or less. The x5 can be controlled by adjusting the amount supplied of nickel when producing a positive electrode active material. In addition, the y5 represents a composition ratio of a cobalt in the oxide containing three transition metals. The y5 is within the range of more than 0 and less than 1, preferably within the range of 0.05 or more and 0.2 or less, and more preferably within the range of 0.05 or more and 0.1 or less. The y5 can be controlled by adjusting the amount supplied of cobalt when producing a positive electrode active material. In addition, the z5 represents a composition ratio of an aluminum in the oxide containing three transition metals. The z5 is within the range of more than 0 and less than 1, preferably within the range of 0.05 or more and 0.2 or less, and more preferably within the range of 0.05 or more and 0.1 or less. The z5 can be controlled by adjusting the amount supplied of aluminum when producing a positive electrode active material.

Among the positive electrode active material exemplified above, from the viewpoints of energy density and thermal stability, an oxide containing three transition metals consisting of LiCoO₂; LiNiO₂; solid solution of Li₂MnO₃ and LiMeO₂ (Me = Mn, Co, Ni): LiNiₓ₄Co_{y4}Mn_{z4}O₂ (0 < x4 < 1, 0 < y4 < 1, 0 < z4 < 1, x4 + y4 + z4 = 1), or LiNiₓ₅Co_{y5}Al_{z5}O₂ (0 < x5 < 1, 0 < y5 < 1, 0 < z5 < 1, x5 + y5 + z5 = 1) is preferred, and more preferably an oxide containing three transition metals consisting of LiNiₓ₄Co_{y4}Mn_{z4}O₂ (0.6 ≤ x4 < 1, 0 < y4 < 0.4, 0 < z4 < 0.4, 0 < y4 + z4 ≤ 0.4, x4 + y4 + z4 = 1) or LiNiₓ₅Co_{y5}Al_{z5}O₂ (0.6 ≤ x5 < 1, 0 < y5 < 0.4, 0 < z5 < 0.4, 0 < y5 + z5 ≤ 0.4, x5 + y5 + z5 = 1) is used.

In the case of the sodium ion secondary battery, for example, a transition metal compound having a structure in which a sodium ion can diffuse or an oxide of the transition metal compound and a sodium is listed. Specifically, NaFeO₂, NaNiO₂, NaCoO₂, NaMnO₂, NaVO₂, NaCrO₂, Na₂MeSiO₄ (Me = at least one or more metal atom of Fe, Mn and Co), Na₂MnO₃+NaMeO₂ (Me = at least one or more metal atom of Mn, Co, Ni and Fe) solid solution, Na_{0.7}(MnₓNi_{y}Co_{z})O₂ (x + y + z = 1, 0 < x < 1, 0 < y < 1, 0 < z < 1), Na_{2/3}(NiₓMn_{y})O₂ (x + y = 1, 0 < x < 1, 0 < y < 1), Na_{2/3}(FeₓMn_{y})O₂ (x + y = 1, 0 < x < 1, 0 < y < 1), Na_{2/3}(NiₓMn_{y}Mg_{z})O₂ (x + y + z = 1, 0 < x < 1, 0 < y < 1, 0 < z < 1), Na_{2/3}(NiₓMn_{y}Al_{z})O₂ (x + y + z = 1, 0 < x < 1, 0 < y < 1, 0 < z < 1), Na₂Fe₂P₂O₇, Na₃V₂(PO₄)₃, Na₄Ni₃(PO₄)₂P₂O₇, Na₄Co₃(PO₄)₂P₂O₇, Na₂Fe₂(SO₄)₃, or the like is listed.

In the case of a potassium ion secondary battery, for example, a transition metal compound having a structure in which a potassium ion can diffuse, or oxide of the transition metal compound and a potassium is listed. Specifically, KFeO₂, KNiO₂, KCoO₂, KMnO₂, K_{2/3}MnO₂, KMn2O₄, KVO₂, KCrO₂, K2MeSiO₄ (Me = at least one or more metal atom of Fe, Mn and Co), K₂MnO₃+KMeO₂ (Me = at least one or more metal atom of Mn, Co, Ni and Fe) solid solution, K(MnₓNi_{y}Co_{z})O₂ (x + y + z = 1,0<x< 1,0<y< 1, 0<z< 1), K(NiₓTi_{y})O₂ (x + y = 1, 0 < x < 1, 0 < y < 1), K_{2/3}(NiₓMn_{y})O₂ (x + y = 1, 0 < x < 1, 0 < y < 1), K(NiₓMn_{y})O₂ (x + y = 1, 0 < x < 1, 0 < y < 1), K_{2/3}(FeₓMn_{y})O₂ (x + y = 1, 0 < x < 1, 0 < y < 1), K₃V₂(PO₄)₃, KMePO₄ (Me = at least one or more metal atom of Fe, Mn and Co), K₂MePO₄F (Me = at least one or more metal atom of Fe, Mn and Co), or the like is listed.

In the case of a magnesium ion secondary battery, for example, a transition metal compound having a structure in which a magnesium ion can diffuse, or an oxide of the transition metal compound and a magnesium is listed. Specifically, MgNiO₂, MgCoO₂, MgMnO₂, MgMe₂O₄ (Me = at least one or more metal atom of Fe, Mn, Co, Ni and Cr), MgMeSiO₄ (Me = at least one or more metal atom of Fe, Mn, Co, Ni, Cu and V), Mg(MnₓNi_{y}Co_{z})O₂ (x + y + z = 1, 0 < x < 1, 0 < y < 1, 0 < z < 1), MgMePO₄ (Me = at least one or more metal atom of Fe, Mn and Co), MgMePO₄F (Me = at least one or more metal atom of Fe, Mn, Co and V), MeBO₃ (Me = at least one or more metal atom of V, Ti, Mn and Co) Mo₆S₈, MoS₂, MnS₂, TiS₂, MgMo₆S₈, TiNb₂O₇, V₂O₅, MnO₂, Mn₃O₄, KMnO₄, Mg(MnO₄)₂, FeF₃, MnF₃, or the like is listed.

In the case of a calcium ion secondary battery, for example, a transition metal compound having a structure in which a calcium ion can diffuse, or an oxide of the transition metal compound and a calcium, Prussian blue analog (PBA) is listed. Specifically, MoO₃, Ca_{1/2}CoO₂, CaV₂O₅, MeFe-PBA (Me = at least one or more metal atom of Ni, Mn and Co), or the like is listed.

The positive electrode 1 can be obtained by subjecting a positive electrode active material listed above together with a known conductive additive or a binder to a compression molding, or mixing a positive electrode active material together with a known conductive additive or a binder in an organic solvent such as a pyrrolidone, applying the mixture formed into a paste on a current collector such as an aluminum foil, and then drying the applied mixture.

The positive electrode current collector may be a conductor having electrochemical or chemical corrosion resistance. More specifically, a plate or a foil of a stainless steel, an aluminum, a titanium, a tantalum or the like can be used. Among them, the plate or the foil of a stainless steel or an aluminum is a preferred current collector in both aspects of property and cost.

The conductive additive includes a graphite, a graphene, a carbon black, a carbon nanotube, a needle coke and the like, but not limited thereto. In addition, these conductive additives may be used alone or in combination of plural kinds.

The content of the conductive additive contained in the positive electrode active material layer is preferably from 0.01 to 20% by mass, more preferably from 0.1 to 15% by mass, and particularly preferably from 1 to 10% by mass, from the viewpoint of electric conductivity.

The binder is not particularly limited in the kinds, if the binder is a material which is stable to a non-aqueous solvent used in an electrolyte solution or a solvent used upon producing an electrode, and the binder specifically includes a polyethylene, a polypropylene, a polyethylene terephthalate, a cellulose, a styrene-butadiene rubber, an isoprene rubber, a butadiene rubber, a fluorine rubber, an acrylonitrile-butadiene rubber, a vinyl acetate copolymer, a polyvinylidene fluoride, a polytetrafluoroethylene, a fluorinated polyvinylidene fluoride, a polytetrafluoroethylene, an alkali metal ion-conductive polymer, and the like. Among them, the binder can be used alone or in combination of two or more kinds.

The content of the binder contained in the positive electrode active material layer is preferably from 0.1 to 30% by mass, more preferably from 1 to 20% by mass, and particularly from 5 to 10% by mass, from the viewpoints of mechanical strength and electric conductivity.

The solvent for making a slurry is not particularly limited, if the solvent is a material which can dissolve or disperse the positive electrode active material, the binder and the conductive additive and can be easily removed by drying later. The solvent includes, for example, water, alcohol, N-methylpyrrolidone, dimethylformamide, dimethylacetamide, methyl ethyl ketone, cyclohexanone, methyl acetate, tetrahydrofuran, toluene, acetone, dimethyl ether, dimethyl sulfoxide, benzene, xylene, hexane, and the like. Here, these solvents may be used alone or in combination of two or more kinds.

A material of the negative electrode active material in the negative electrode 2 includes, without being particularly limited to, a material which can occlude or release a lithium, in the case of a lithium ion secondary battery. For example, the material includes, a metal complex oxide, a lithium metal, a lithium alloy, a silicone, a silicon-based alloy, a tin-based alloy, a metal oxide, a metal sulfide, a lithium nitride, an electrically conductive polymer such as a polyacene, a polyacetylene or a polythiophene, a carbon material, and the like.

The metal complex oxide includes, without being particularly limited to, for example, Li₄Ti₅O₁₂, LixFe₂O₃ (0 ≤ x ≤ 1), LiₓWO₂ (0 ≤ x ≤ 1), Li₄WO₅, SnₓMe¹₁₋ₓMe²_{y}O_{z} (Me¹ = Mn, Fe, Pb, Ge, Me² = Al, B, P, Si, elements in group 1 to 3 of a periodic table, halogen, 0 < x ≤ 1, 1 ≤ y ≤ 3, 1 ≤ z ≤ 8), Sn₂B₂O₅, Sn₂P₂O₇, Sn₂BPO₆, TiNb₂O₇, Ti₂Nb₁₀O₂₉, and the like.

The metal oxide includes, without being particularly limited to, for example, SnO, SnO₂, SiOₓ (0 < x < 2), PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, Li₂O, Al₂O₃, ZnO, In₂O₃, TiO₂, Nb₂O₅, MoO₂, WO₂, CuO, and the like.

The metal sulfide includes, without being particularly limited to, for example, SnS, FeS₂, and the like.

The lithium nitride includes, without being particularly limited to, for example, Li₅(Li₃N), Li₇MnN₄, Li₃FeN₂, LiₓCo_{y}N (0 < x ≤ 3, 0 ≤ y ≤ 1, x + y = 3), and the like.

The carbon material includes, without being particularly limited to, for example, a carbon black, an activated carbon, a natural graphite, an artificial graphite, a boronized graphite, a metal-coated graphite, a fluorinated graphite, a mesocarbon microbead, a graphized pitch-based carbon fiber, a calcined organic polymeric compound, a carbon nanotube, a hard carbon, a fullerene, a coke, and the like. These may be used alone or in combination of two or more kinds.

In the case of a sodium ion secondary battery, a material of negative electrode active material includes, without being particularly limited to, for example, a sodium metal, a metal oxide such as Na2Ti6O13, carbon material such as a natural graphite, an artificial graphite, a boronized graphite, a hard carbon, a calcined organic polymeric compound, a mesocarbon microbead, and a graphized pitch-based carbon fiber or a carbon nanotube, and the like, if the material can occlude and release sodium.

In the case of a potassium ion secondary battery, a material of the negative electrode active material include, without being particularly limited to, for example, a metal complex oxide such as K2Ti6O13, a potassium metal, a carbon material such as a natural graphite, an artificial graphite, a coke, a boronized graphite, a hard carbon, a carbon black, a calcined organic polymeric compound, a mesocarbon microbead, a graphized pitch-based carbon fiber or a carbon nanotube, and the like, if the material can occlude and release potassium.

In the case of a magnesium ion secondary battery, a material of the negative electrode active material includes, without being particularly limited to, for example, a magnesium metal, a magnesium alloy, a bismuth-added alloy, a copper-added alloy, a metal complex oxide, a carbon material such as a natural graphite, an artificial graphite, a coke, a boronized graphite, a hard carbon, a carbon black, a calcined organic polymeric compound, a mesocarbon microbead, a graphized pitch-based carbon fiber or a carbon nanotube, and the like, if the material can occlude and release magnesium.

In the case of a calcium ion secondary battery, a material of the negative electrode active material includes, without being particularly limited to, for example, a calcium metal, a calcium alloy, a metal complex oxide, a carbon material such as a natural graphite, an artificial graphite, a coke, a boronized graphite, a hard carbon, a carbon black, a calcined organic polymeric compound, a mesocarbon microbead, a graphized pitch-based carbon fiber or a carbon nanotube, and the like, if the material can occlude and release calcium.

As the negative electrode 2, a foil or a powder of the electrode material can be used. In the case of a powder, the negative electrode can be obtained by subjecting a known conductive additive and a binder to a compression molding together, or mixing a known conductive additive and a binder in an organic solvent such as pyrrolidone, applying the mixture formed into a paste to a current collector such as a copper foil, and then drying the applied product.

A negative electrode current collector may be a conductor having electrochemical or chemical corrosion resistance. More specifically, a plate or a foil of a copper, a stainless steel, a nickel and the like can be used. Among them, the plate or the foil of a copper is a preferred current collector in both aspects of properties and cost.

The conductive additive includes a graphite, a graphene, a carbon black, a carbon nanotube, a needle coke, and the like, but not limited thereto. In addition, these conductive additives may be alone or a combination of plural kinds.

The content of the conductive additive contained in the negative electrode active material layer is preferably from 0.01 to 20% by mass, more preferably from 0.1 to 15% by mass, and particularly preferably from 1 to 10% by mass, from the viewpoint of electric conductivity.

The binder is not particularly limited in the kinds, if the binder is a material which is stable to a non-aqueous solvent used in an electrolyte solution or a solvent used upon producing an electrode, and the binder specifically includes a polyethylene, a polypropylene, a polyethylene terephthalate, a carboxymethylcellulose, a styrene-butadiene rubber, an isoprene rubber, a butadiene rubber, a fluorine rubber, an acrylonitrile-butadiene rubber, a vinyl acetate copolymer, a polyvinylidene fluoride, a polytetrafluoroethylene, a fluorinated polyvinylidene fluoride, a polytetrafluoroethylene, an alkali metal ion conductive polymer, and the like. Among them, the binder can be used alone or in combination of two or more kinds.

The content of the binder contained in the negative electrode active material layer is preferably from 0.1 to 30% by mass, more preferably from 1 to 20% by mass, and particularly preferably from 5 to 10% by mass, from the viewpoints of mechanical strength, battery capacity, electrical resistance, and the like.

A solvent for making a slurry is not particularly limited, if the solvent is a material which can dissolve or disperse the negative electrode active material, the binder and the conductive additive and then can be easily removed by drying. For example, the solvent includes water, alcohol, N-methylpyrrolidone, dimethylformamide, dimethylacetamide, methyl ethyl ketone, cyclohexanone, methyl acetate, tetrahydrofuran, toluene, acetone, dimethyl ether, dimethyl sulfoxide, benzene, xylene, hexane, and the like. Here, these solvents may be used alone or in combination of two or more kinds.

The lithium ion secondary battery according to the present embodiment contains a separator 3 generally intervened between a positive electrode 1 and a negative electrode 2 to prevent a short of the positive electrode and the negative electrode. The material or shape of the separator 3 is not particularly limited, but the separator is preferably a material through which the non-aqueous electrolyte solution mentioned above passes easily, which is an insulator and chemically stable. For example, the separator includes a microporous film, a sheet, a non-woven, a product having a surface thereof coated with glass, a non-woven of glass fiber consisting of various polymers. As the specific example of the polymeric materials, a polyolefin-based polymer such as Nylon (registered trademark), a nitrocellulose, a polyacrylonitrile, a polyimide, a polyvinylidene fluoride, a polyethylene or a polypropylene is used. The polyolefin-based polymer is preferred from the viewpoints of electrochemical stability and chemical stability.

The lithium ion secondary battery of the present embodiment can be charged at a high charging voltage. The charging voltage is preferably 4.3 V or more, more preferably within the range of 4.3 V or more and 5 V or less, even more preferably within the range of 4.35 V or more and 4.8 V or less, and particularly preferably within the range of 4.4 V or more and 4.7 V or less.

The shape of the lithium ion secondary battery of the present embodiment is not particularly limited, but the shape includes a coin-shaped cell shown in FIG. 1, and additionally, for example, a cylinder shape, a rectangular shape, a laminate shape, and the like.

The secondary battery according to the present embodiment can exhibit excellent cyclic property even under a high temperature environment, and the non-aqueous electrolyte solution of the present embodiment can be suitably used in, for example, a lithium ion secondary battery. However, the lithium ion secondary battery shown in FIG. 1 is an illustration of an embodiment of the secondary battery of the present invention, but the secondary battery of the present invention is not limited thereto.

### EXAMPLES

Hereinbelow, preferred Examples of the present invention will be exemplarily explained in detail. However, materials, formulated amounts, and the like described in the Examples do not limit the scope of the present invention thereto, unless there are particularly limitative descriptions.

### (Example 1)

### < Preparation of Non-Aqueous Electrolyte Solution >

A LiPF₆ was mixed with a mixed solvent consisting of ethylene carbonate (EC) and dimethyl carbonate (DMC) (volume ratio of EC:DMC = 1:1, manufactured by KISHIDA CHEMICAL Co., Ltd., lithium battery grade) in an argon glove box having dew point of -70°C or lower. The mixing of LiPF₆ was carried out such that the concentration of LiPF₆ was 1.0 mole/liter.

Next, a lithium phenoxide (LiOPh) and a vinylene carbonate (VC) were added to the non-aqueous electrolyte solution as an additive such that each of the addition concentration was 0.2% by mass based on the total mass of the non-aqueous electrolyte solution. Finally, the non-aqueous electrolyte solution of the Example was prepared.

### (Example 2)

In the Example, a non-aqueous electrolyte solution of the Example was prepared in the same manner as that of Example 1, except that a lithium difluorophosphate (LiDFP) was added in place of the vinylene carbonate of Example 1 such that the addition concentration thereof was 0.2% by mass.

### (Example 3)

In the Example, a non-aqueous electrolyte solution of the Example was prepared in the same manner as that of Example 1, except that a fluoroethylene carbonate (FEC) was added in place of the vinylene carbonate of Example 1 such that the addition concentration thereof was 0.2% by mass.

### (Example 4)

In the Example, a non-aqueous electrolyte solution of the Example was prepared in the same manner as that of Example 2, except that a sodium phenoxide was added in place of the lithium phenoxide of Example 2 such that the addition concentration thereof was 0.2% by mass.

### (Example 5)

In the Example, a non-aqueous electrolyte solution of the Example was prepared in the same manner as that of Example 2, except that a lithium 4-tert-amylphenoxide was added in place of the lithium phenoxide of Example 2 such that the addition concentration thereof was 0.2% by mass.

### (Comparative Example 1)

A LiPF₆ was added to a mixed solvent consisting of an ethylene carbonate (EC) and a dimethyl carbonate (DMC) (volume ratio of EC:DMC = 1:1, manufactured by KISHIDA CHEMICAL Co., Ltd., lithium battery grade) in an argon glove box having dew point of -70°C or lower. The mixing of LiPF₆ was carried out such that the concentration of LiPF₆ was 1.0 mole/liter. Finally, a non-aqueous electrolyte solution of the Comparative Example was prepared.

### (Comparative Example 2)

In the Comparative Example, a non-aqueous electrolyte solution of the Comparative Example was prepared in the same manner as that of Example 1, except that the vinylene carbonate of Example 1 was not added.

### (Comparative Example 3)

In the Comparative Example, a non-aqueous electrolyte solution of the Comparative Example was prepared in the same manner as that of Example 1, except that the lithium phenoxide of Example 1 was not added.

### (Comparative Example 4)

In the Comparative Example, a non-aqueous electrolyte solution of the Comparative Example was prepared in the same manner as that of Example 2, except that the lithium phenoxide of Example 2 was not added.

### (Comparative Example 5)

In the Comparative Example, a non-aqueous electrolyte solution of the Comparative Example was prepared in the same manner as that of Example 3, except that the lithium phenoxide of Example 3 was not added.

### (Comparative Example 6)

In the Comparative Example, a non-aqueous electrolyte solution of the Comparative Example was prepared in the same manner as that of Example 4, except that the lithium difluorophosphate of Example 4 was not added.

### (Evaluation of High Temperature Storage Property and Cyclic Property)

### < Production of Coin-Shaped Cell >

Non-aqueous electrolyte solution prepared in each of Examples 1 to 5 and Comparative Examples 1 to 6 was used to produce a lithium secondary battery in a coin shape shown in FIG. 1 (coin-shaped cell), and electrochemical properties were evaluated.

In other words, a LiNi_{0.6}Co_{0.2}Mn_{0.2}O₂ manufactured by Piotrek Co., Ltd. cut out to have a diameter of 15 mm φ was used in a positive electrode, and a glass filter paper under the tradename: GC-50 manufactured by ADVANTEC TOYO KAISHA, LTD. was used in a separator. In addition, a natural graphite manufactured by Piotrek Co., Ltd. cut out to have a diameter of 16 mm φ was used in a negative electrode. Further, the positive electrode, the separator and the negative electrode were laminated in this order to produce a laminate, which was impregnated with each of the non-aqueous electrolyte solutions prepared in Examples 1 to 5 and Comparative Examples 1 to 6, and then the laminate was tightly closed, to produce a coin-shaped cell. Assembly of the coin-shaped cell was carried out in an argon glove box having a dew point of -70°C or lower.

### < Break-in of Coin-Shaped Cell >

Each of the produced coin-shaped cells was charged at 0.2 C of a charging current (a current value which charges or discharges rated capacity for 1 hour is defined as 1 C) to 4.4 V of cut-off voltage in a thermostat at 25°C, and further a constant potential was maintained at 4.4 V until a charging current became 0.05 C or less. Thereafter, the cell was discharged at 0.2 C of a discharging current to 3.0 V of cut-off voltage. Three cycles of charging and discharging cycles were carried out in a constant current constant voltage method, and the discharging capacity at a third cycle was defined as an initial discharging capacity.

### < High Temperature Storage Test >

Next, each of coin-shaped cells after carrying out a break-in was charged at 0.2 C of charging current to 4.4 V of cut-off voltage in a thermostat at 25°C, further a constant voltage was maintained at 4.4 V until the charging current became 0.05 C or less, to terminate charging. Thereafter, the temperature in the thermostat was changed to 60°C, and each coin-shaped cell after charging was stored at high temperature for two weeks.

After two weeks, the temperature in the thermostat was returned to 25°C, each of coin-shaped cells after high temperature storage test was discharged at 0.2 C of a discharging current to 3.0 V of cut-off voltage, and the capacity at that time was defined as a discharging capacity after high temperature storage. Table 1 gives a ratio of the discharging capacity after storage when the initial discharging capacity was defined as 100.

### < Measurement of Internal Resistance of Coin-Shaped Cell >

The internal resistance of each coin-shaped cell was obtained by an alternating current impedance method. Each coin-shaped cell after high temperature storage was charged at 0.2 C of charging current to 4.4 V of cut-off voltage in a thermostat at 25°C, a sine wave having an amplitude ± 10 mV and a frequency from 1 MHz to 50 mHz was superimposed to obtain internal resistance of each coin-shaped cell from Nyquist plot. Table 2 gives the ratio of internal resistance of other coin-shaped cells when internal resistance of the coin-shaped cell using a non-aqueous electrolyte solution of Comparative Example 1 was defined as 100.

### < Cyclic Property Test >

Each coin-shaped cell after high temperature storage was charged at 1.0 C of a charging current to 4.4 V of cut-off voltage in a thermostat at 25°C, and further a constant potential was maintained at 4.4 V until a charging current became 0.05 C or less. Thereafter, cells were discharged at 0.2 C of discharging current to 3.0 V of cut-off voltage. Under this charging and discharging condition, 100 cycles of charging and discharging cycles were carried out in a constant current constant voltage method. A discharging capacity at 100^{th} cycle was compared and evaluated. Table 3 gives the ratio of discharging capacity of Examples 1 to 5 and Comparative Examples 2 to 6 when Comparative Example 1 was defined as 100.

**[Table 1]**

| Tab e 1 | | | |
|---|---|---|---|
| | Component A | Component B | Discharging capacity after high temperature storage [%] |
| Example 1 | Lithium phenoxide | Vinylene carbonate | 87 |
| Example 2 | Lithium phenoxide | Lithium difluorophosphate | 89 |
| Example 3 | Lithium phenoxide | Fluoroethylene carbonate | 87 |
| Example 4 | Sodium phenoxide | Lithium difluorophosphate | 88 |
| Example 5 | Lithium 4-tert-amylphenoxide | Lithium difluorophosphate | 88 |
| Comp. Ex. 1 | None | None | 83 |
| Comp. Ex. 2 | Lithium phenoxide | None | 76 |
| Comp. Ex. 3 | None | Vinylene carbonate | 84 |
| Comp. Ex. 4 | None | Lithium difluorophosphate | 86 |
| Comp. Ex. 5 | None | Fluoroethylene carbonate | 83 |
| Comp. Ex. 6 | Sodium phenoxide | None | 75 |

### [Table 2]

**Table 2**

| | Component A | Component B | Internal resistance of coin-shaped cell [%] |
|---|---|---|---|
| Example 1 | Lithium phenoxide | Vinylene carbonate | 78 |
| Example 2 | Lithium phenoxide | Lithium difluorophosphate | 75 |
| Example 3 | Lithium phenoxide | Fluoroethylene carbonate | 79 |
| Example 4 | Sodium phenoxide | Lithium difluorophosphate | 76 |
| Example 5 | Lithium 4-tert-amylphenoxide | Lithium difluorophosphate | 77 |
| Comp. Ex. 1 | None | None | 100 |
| Comp. Ex. 2 | Lithium phenoxide | None | 154 |
| Comp. Ex. 3 | None | Vinylene carbonate | 90 |
| Comp. Ex. 4 | None | Lithium difluorophosphate | 85 |
| Comp. Ex. 5 | None | Fluoroethylene carbonate | 92 |
| Comp. Ex. 6 | Sodium phenoxide | None | 161 |

### [Table 3]

**Table 3**

| | Component A | Component B | Discharging capacity after 100 cycles [%] |
|---|---|---|---|
| Example 1 | Lithium phenoxide | Vinylene carbonate | 110 |
| Example 2 | Lithium phenoxide | Lithium difluorophosphate | 113 |
| Example 3 | Lithium phenoxide | Fluoroethylene carbonate | 110 |
| Example 4 | Sodium phenoxide | Lithium difluorophosphate | 112 |
| Example 5 | Lithium 4-tert-amylphenoxide | Lithium difluorophosphate | 112 |
| Comp. Ex. 1 | None | None | 100 |
| Comp. Ex. 2 | Lithium phenoxide | None | 90 |
| Comp. Ex. 3 | None | Vinylene carbonate | 102 |
| Comp. Ex. 4 | None | Lithium difluorophosphate | 105 |
| Comp. Ex. 5 | None | Fluoroethylene carbonate | 102 |
| Comp. Ex. 6 | Sodium phenoxide | None | 91 |

As is clear from the above Tables 1 to 3, it was confirmed that the coin-shaped cells using non-aqueous electrolyte solutions of Examples 1 to 5 had higher discharging capacity after charging at high charging voltage of 4.4 V and further high temperature storage at 60°C for 2 weeks, additionally had low internal resistance, and had excellent cyclic property, as compared to Comparative Examples 1 to 6.

### INDUSTRIAL APPLICABILITY

The non-aqueous electrolyte solution according to the present embodiment can be suitably used in, for example, a lithium ion secondary battery.

### [Explanation of Numerical Symbols]

- 1: positive electrode
- 2: negative electrode
- 3: separator
- 4: positive electrode can
- 5: negative electrode can
- 6: gasket
- 7: spacer
- 8: spring

## Claims

1. A secondary battery non-aqueous electrolyte solution for use in a secondary battery **characterized by** comprising as an additive at least one of the following component (A) and at least one of the following component (B):
component (A): a compound represented by the following chemical formula (1): 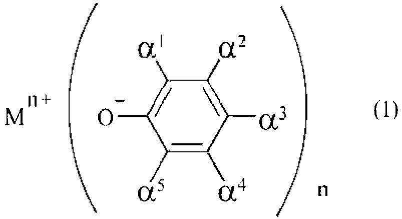
wherein the Mⁿ⁺ represents any one selected from the group consisting of an alkali metal ion, an alkaline-earth metal ion, an aluminum ion, a transition metal ion and an onium ion, the α¹ to α⁵ each, independently, represents a hydrogen atom, a halogen atom, a hydroxy group, a mercapto group, a nitro group, a formyl group, a sulfo group, a carboxy group, an acetyl group, a sulfonamide group, a cyano group, an amino group, a thio group comprising a hydrocarbon group having the number of carbon atoms of from 1 to 20, an amino group comprising a hydrocarbon group having the number of carbon atoms of from 1 to 20, a sulfonyl group comprising a hydrocarbon group having the number of carbon atoms of from 1 to 20, a hydrocarbon group or an alkoxy group having carbon atoms of from 1 to 20, or a hydrocarbon group or an alkoxy group of which the number of carbon atoms ranges from 1 to 20 having at least any one of a halogen atom, a heteroatom or an unsaturated bond, or in the α¹ to α⁵ any of a hydrocarbon group or an alkoxy group having the number of carbon atoms of from 1 to 20, or a hydrocarbon group or an alkoxy group of which the number of carbon atoms ranges from 1 to 20 having at least any one of a halogen atom, a heteroatom or an unsaturated bond is bound to each other, to form a cyclic structure, and the n represents a valency;
component (B): at least one compound selected from the group consisting of a boron complex salt represented by the following chemical formula (2), a borate or an acid anhydride, or a cyclic carbonate having an unsaturated bond, a cyclic carbonate having a halogen atom, a cyclic sulfonate, a cyclic sulfate, a cyclic sulfite, amines having an acetoacetyl group represented by the following chemical formula (3), a phosphorous compound represented by any of the following chemical formulae (4) to (6), sulfonylimide salts, sulfonates and dinitriles; 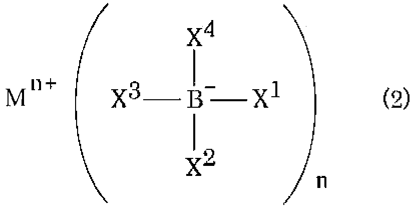
wherein the Mⁿ⁺ represents a hydrogen ion, an alkali metal ion, an alkaline-earth metal ion, an aluminum ion, a transition metal ion or an onium ion, each of the X¹ to X⁴ is independent, and a combination of optionally selected one or two thereof forms a cyclic structure of -OOC-COO-, -OOCO-, -OOC-Y-COO-, -O-Y-O- or -OOC-Y-O-, wherein the Y each, independently, represents a hydrocarbon group having the number of carbon atoms of from 1 to 20, or a hydrocarbon group of which the number of carbon atoms ranges from 1 to 20 having a heteroatom, an unsaturated bond or a cyclic structure, or the X¹ to X⁴ each, independently, represents a halogen atom, an alkyl group having the number of carbon atoms of from 1 to 20, an alkoxy group having the number of carbon atoms of from 1 to 20, an alkyl group of which the number of carbon atoms ranges from 1 to 20 having at least any one of a halogen atom, a heteroatom or an unsaturated bond, or an alkoxy group of which the number of carbon atoms ranges from 1 to 20 having at least any one of a halogen atom, a heteroatom or an unsaturated bond, and the n represents a valency; 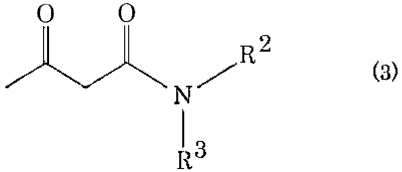
wherein the R² and R³ each, independently, represents a hydrocarbon group having the number of carbon atoms of from 1 to 20, or a hydrocarbon group of which the number of carbon atoms ranges from 1 to 20 having a halogen atom, a heteroatom or an unsaturated bond; 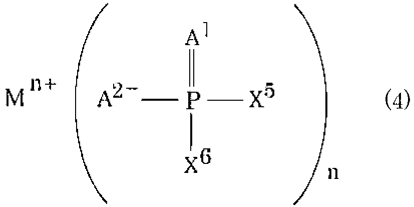
wherein the Mⁿ⁺ represents a hydrogen ion, an alkali metal ion, an alkaline-earth metal ion, an aluminum ion, a transition metal ion or an onium ion, the A¹ and A² each, independently, represents an oxygen atom, a sulfur atom or a selenium atom, the X⁵ and X⁶ each, independently, represents a halogen atom, an alkyl group having the number of carbon atoms of from 1 to 20, or an alkyl group of which the number of carbon atoms ranges from 1 to 20 having at least any one of a halogen atom, a heteroatom or an unsaturated bond, or the X⁵ and X⁶ are any of the alkyl group having the number of carbon atoms of from 1 to 20, or the alkyl group of which the number of carbon atoms ranges from 1 to 20 having at least any one of a halogen atom, a heteroatom or an unsaturated bond, and are bound to each other, to form a cyclic structure, and the n represents a valency; 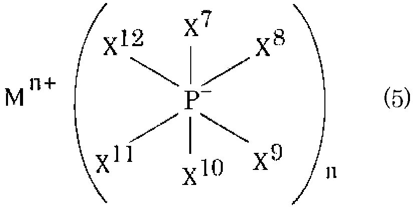
wherein the Mⁿ⁺ represents a hydrogen ion, an alkali metal ion, an alkaline-earth metal ion, an aluminum ion, a transition metal ion or an onium ion, the X⁷ to X¹² each, independently, represents a halogen atom, an alkyl group having the number of carbon atoms of from 1 to 20, an alkoxy group having the number of carbon atoms of from 1 to 20, an alkylthio group having the number of carbon atoms of from 1 to 20, an alkyl group of which the number of carbon atoms ranges from 1 to 20 having at least any one of a halogen atom, a heteroatom or an unsaturated bond, an alkylthio group having the number of carbon atoms of from 1 to 20, an alkoxy group of which the number of carbon atoms ranges from 1 to 20 having at least any one of a halogen atom, a heteroatom or an unsaturated bond, an alkylthio group having the number of carbon atoms of from 1 to 20, or an alkylthio group of which the number of carbon atoms ranges from 1 to 20 having at least any one of a halogen atom, a heteroatom or an unsaturated bond, or a combination of the optionally selected at least one of the X⁷ to X¹² forms a cyclic structure of -OOC-COO-, -OOCO-, -OOC-Z-COO-, -OOC-Z-O- or -O-Z-O-, wherein the Z represents a hydrocarbon group having the number of carbon atoms of from 1 to 20, or a hydrocarbon group of which the number of carbon atoms ranges from 1 to 20 having at least any one of a halogen atom, a heteroatom, an unsaturated bond or a cyclic structure, and the n represents a valency; 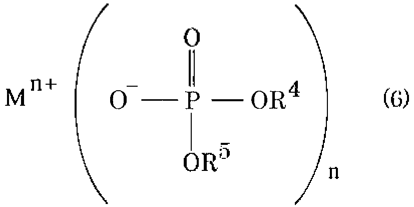
wherein the Mⁿ⁺ represents a hydrogen ion, an alkali metal ion, an alkaline-earth metal ion, an aluminum ion, a transition metal ion or an onium ion, the R⁴ and R⁵ each, independently, represents a hydrocarbon group having the number of carbon atoms of from 1 to 20, or a hydrocarbon group of which the number of carbon atoms ranges from 1 to 20 having at least any one of a halogen atom, a heteroatom or an unsaturated bond, or the R⁴ and R⁵ are any of the hydrocarbon group having the number of carbon atoms of from 1 to 20, or the hydrocarbon group of which the number of carbon atoms ranges from 1 to 20 having at least any one of a halogen atom, a heteroatom or an unsaturated bond, and represent ones which are bound to each other to form a cyclic structure, and the n represents a valency.

2. The secondary battery non-aqueous electrolyte solution according to claim 1, wherein the content of the component (A) based on the total mass of the secondary battery non-aqueous electrolyte solution is from 0.05 to 5% by mass.

3. The secondary battery non-aqueous electrolyte solution according to claim 1, wherein the content of the component (B) based on the total mass of the secondary battery non-aqueous electrolyte solution is from 0.05 to 5% by mass.

4. The secondary battery non-aqueous electrolyte solution according to claim 1, wherein the component (A) is lithium phenoxide, lithium 4-tert-amylphenoxide or sodium phenoxide.

5. The secondary battery non-aqueous electrolyte solution according to claim 1, wherein the component (B) is 1,3-propanesultone.

6. The secondary battery non-aqueous electrolyte solution according to claim 1, wherein the component (B) is vinylene carbonate.

7. The secondary battery non-aqueous electrolyte solution according to claim 1, wherein the component (B) is fluoroethylene carbonate.

8. The secondary battery non-aqueous electrolyte solution according to claim 1, wherein the component (B) is lithium difluorophosphate.

9. The secondary battery non-aqueous electrolyte solution according to claim 1, wherein the component (B) is lithium difluoro(oxalato)borate.

10. The secondary battery non-aqueous electrolyte solution according to claim 1, wherein the component (B) is lithium difluorobis(oxalato)phosphate.

11. The secondary battery non-aqueous electrolyte solution according to claim 1, wherein the component (B) is lithium tetrafluoro(oxalato)phosphate.

12. The secondary battery non-aqueous electrolyte solution according to claim 1, wherein the component (B) is lithium bis(fluorosulfonyl)imide.

13. The secondary battery non-aqueous electrolyte solution according to claim 1, wherein the component (B) is lithium fluorosulfonate.

14. The secondary battery non-aqueous electrolyte solution according to claim 1, wherein the component (B) is succinonitrile.

15. A secondary battery at least comprising a secondary battery non-aqueous electrolyte solution as defined in any one of claims 1 to 14, a positive electrode and a negative electrode.
